# EUROPÄISCHE PATENTSCHRIFT

(11) **EP 1 753 837 B1**
(45) Veröffentlichungstag und Bekanntmachung des Hinweises auf die Patenterteilung: **23.01.2013**
(21) Anmeldenummer: 05745086.8
(22) Anmeldetag: 23.05.2005
(51) Int. Cl.: C09K 5/04, F25B 15/00, C09K 5/08, C09K 5/10

(54) **VERWENDUNG VON ARBEITSSTOFFPAAREN FÜR ABSORPTIONSWÄRMEPUMPEN, ABSORPTIONSKÄLTEMASCHINEN UND WÄRMETRANSFORMATOREN**
USE OF PAIRS OF WORKING SUBSTANCES FOR ABSORPTION HEAT PUMPS, ABSORPTION REFRIGERATION MACHINES AND HEAT TRANSFORMERS
UTILISATION DE PAIRES DE SUBSTANCES POUR DES POMPES A CHALEUR A ABSORPTION, DES MACHINES FRIGORIFIQUES A ABSORPTION ET DES TRANSFORMATEURS THERMIQUES

(30) Priorität: 21.05.2004 DE 102004024967
(43) Veröffentlichungstag der Anmeldung: 21.02.2007
(73) Patentinhaber: BASF SE, 67056 Ludwigshafen (DE)
(72) Erfinder: BOESMANN, Andreas, 79252 Stegen (DE); SCHUBERT, Thomas, 79100 Freiburg (DE)
(86) Internationale Anmeldenummer: PCT/EP2005/005570
(87) Internationale Veröffentlichungsnummer: WO 2005/113702

(56) Entgegenhaltungen:
- EP-A- 0 012 856
- WO-A-2004/090066
- DE-A1- 3 623 680
- WU B, REDDY RG, ROGERS RD: "Novel Ionic liquid thermal storage for solar thermal electric power systems" PROCEEDINGS OF SOLAR FORUM 2001, April 2001 (2001-04), XP002341969 Washington DC

## Beschreibung

Die vorliegende Erfindung betrifft siehe 1a - 1b

Absorptionskreisläufe bieten prinzipiell hervorragende Möglichkeiten der rationellen Energienutzung beim Heizen und Kühlen sowie bei der Wärmerückgewinnung, wobei nur ein minimaler Einsatz hochwertiger elektrischer Energie zum Betrieb von Flüssigkeitspumpen erforderlich ist.

Besonders sinnvolle und zukunftsträchtige Anwendungen dieser Technik liegen in der Klimatisierung von Gebäuden mittels regenerativer Energien wie der Solarenergie oder der Geothermie und in der Nutzung, bzw. Rückgewinnung von Abwärme aus einer Vielzahl technischer Prozesse.

Man kann zwei Kreislaufvarianten unterscheiden:
1. Absorptionswärmepumpen (AWP) und Absorptionskältemaschinen (AKM) Bei dieser Prozessvariante wird Wärme bei einem höheren Temperaturniveau (Antriebswärme) dem Kreisprozess zugeführt, bei einem mittleren Temperaturniveau Wärme abgegeben (Heizwärme) und Wärme bei einem tiefen Temperaturniveau aus der Umgebung aufgenommen (Abkühlung der Umgebung). AWP und AKM unterscheiden sich nur durch die unterschiedlichen Temperaturniveaus, bei denen Wärme aus der Umgebung aufgenommen wird und somit in der Umgebung eine Abkühlung stattfindet, also "Kälte" erzeugt wird.
2. Absörptionswärmetransformator (AWT) Bei dieser Prozessvariante wird eine bei einem mittleren Temperaturniveau anfallende Wärme in den Kreisprozess eingekoppelt, ein Teil davon auf ein höheres Temperaturniveau transformiert und als Nutzwärme abgegeben. Der andere Teil der zugeführten Wärme wird auf einem niedrigen Temperaturniveau an die Umgebung abgegeben.

Typische Temperaturniveaus für Absorptionsprozesse lassen sich wie folgt angeben:
- obere Temperatur 80 - 150°C
- mittlere Temperatur 50 - 80°C
- untere Temperatur -20 - 20°C (Temperaturen unter 0°C nur bei AWP)

Absorptionsprozesse zur Umwandlung von Wärme sind seit über 100 Jahren bekannt und technisch realisiert worden (z.B. US 3,638,452, US 3,626,716, DE 101 003 95). Trotzdem ist bis heute der breite Durchbruch für diese Technik nicht gelungen, obwohl die Verwendung eines Arbeitsstoffpaars, enthaltend
A) einen Arbeitsstoff, ausgewählt aus Wasser, Methanol oder Ammoniak
B) mindestens eine ionische Flüssigkeit,
   wobei die ionische Flüssigkeit ein Salz der allgemeinen Formein I, I oder III
B1)

   [A]ₙ⁺[Y]ⁿ⁻ (I)

   in der n für 1, 2, 3 oder 4 steht, [A]⁺ für ein quartäres Ammonium-Kation, ein Oxonium-Kation, ein Sulfonium-Kation oder ein Phosphonium-Kation und [Y]ⁿ⁻ für ein ein-, zwei-, drei- oder vierwertiges Anion steht;
B2) gemischte Salze der allgemeinen Formeln (II)

   [A¹]⁺[A²]⁺ [Y]²⁻ (IIa);

   [A¹]⁺[A²]⁺[A³]⁺ [Y]³⁻ (IIb);

   oder

   [A¹]⁺[A²]⁺[A³]⁺[A⁴]⁺ [Y]⁴⁻ (IIc),

   wobei [A¹]⁺ [A²]⁺ [A³]⁺ und [A⁴]⁺ unabhängig voneinander aus den für [A]⁺ genannten Gruppen ausgewählt sind und [Y]ⁿ⁻ die unter B1) genannte Bedeutung besitzt; oder
B3) gemischte Salze der allgemeinen Formeln (III)

   [A+]⁺[A²]⁺[A³]⁺[M¹]⁺ [Y]⁴⁻ (IIIa);

   [A¹]⁺[A²]⁺[M¹]⁺[M²]⁺ [Y]⁴⁻ (IIIb);

   [A¹]⁺[M¹]⁺[M²]⁺[M³]⁺ [Y]⁴⁻ (IIIc);

   [A¹]⁺[A²]⁺[M¹]⁺ [Y]³⁻ (IIId);

   [A¹]⁺[M¹]⁺[M²]⁺ [Y]³⁻ (IIIe);

   [A¹]⁺[M¹]⁺ [Y]²⁻ (IIIf);

   [A¹]⁺[A²]⁺[M⁴]²⁺ [Y]⁴⁻ (IIIg);

   [A¹]⁺[M¹]⁺[M⁴]²⁺ [Y]⁴⁻ (IIIh);

   [A¹]⁺[M⁵]³⁺ [Y]⁴⁻ (IIIi);

   oder

   [A¹]⁺[M⁴]²⁺ [Y]³⁻ (IIIj)

   wobei [A¹]⁺ [A²]⁺ und [A³]⁺ unabhängig voneinander aus den für [A]⁺ genannten Gruppen ausgewählt sind, [Y]ⁿ⁻ die unter B1) genannte Bedeutung besitzt und [M¹]⁺, [M²]⁺, [M³]⁺ einwertige Metallkationen, [M⁴]²⁺ zweiwertige Metallkationen und [M⁵]³⁺ dreiwertige Metallkationen bedeuten;
   ist;
   oder Gemische hiervon
   in Absorptionswärmepumpen, Absorptionskältemaschinen und Absorptionsbasierenden Wärmetransformatoren
   gerade im Zuge der zunehmenden Diskussion der Energie- und Klimaproblematik verstärkt nach sinnvollen Methoden des rationellen Energieeinsatzes gesucht wird.

Der Hauptgrund hierfür ist der Mangel an technisch effizienten, ungefährlichen und betriebssicheren Arbeitsstoffpaaren (leichtflüchtiger Arbeitsstoff - Absorptionsmittel) für diese Art von Prozessen.

In einer Vielzahl von Forschungsarbeiten wurden immer wieder neue mögliche Arbeitsstoffpaare experimentell untersucht sowie Prozesse mit den ermittelten Gemischdaten modelliert und simuliert (siehe hierzu D. Seher, Forschungsberichte des Deutschen Kälte- und Klimatechnischen Vereins, Nr.16, 1985; R. Hengerer, Dissertation Universität Stuttgart, 1991; A.O. Genssle, Fortschritt-Berichte VDI, Reihe 19, Nr. 130, VDI Verlag 2001; A.D. Lucas et al., Int. Journal of Refrigeration 27 (2004) 324 - 330).

Kriterien für optimale Arbeitsstoffpaare für Absorptionswärmepumpen, Absorptionskältemaschinen und Wärmetransformatoren lassen sich gemäß der oben genannten Literatur wie folgt formulieren:
- nicht toxisch und nicht explosiv
- chemische Beständigkeit bis ca. 150°C
- hohe Verdampfungsenthalpie des Arbeitsmittels, wie z.B. Wasser
- hohe Löslichkeit des Arbeitsmittels im Absorptionsmittel
- deutliche Dampfdruckerniedrigung des Arbeitsmittels beim Lösen im Absorptionsmittel
- verschwindend geringer Dampfdruck des Absorptionsmittels
- möglichst vollständige Mischbarkeit des Arbeitsmittels und des Absorptionsmittels
- gute Wärmeleitfähigkeit des Arbeitsmittels und des Absorptionsmittels
- niedrige Viskosität des Absorptionsmittels und der Mischung aus dem Arbeitsmittel und dem Absorptionsmittel
- weder das Arbeitsmittel noch das Absorptionsmittel dürfen korrosiv sein.

Für den praktischen Betrieb von Absorptionsanlagen haben sich letztendlich bis heute nur zwei Stoffsysteme (Arbeitsstoffpaare) durchgesetzt, nämlich Lithiumbromid - Wasser wie in EP 0012856 offenbart, und Ammoniak - Wasser, wobei letzteres überwiegend in AKM Verwendung findet. Alle bisher untersuchten Stoffpaarungen mit organischen Komponenten wurden aus technischen, ökologischen oder sicherheits-relevanten Gründen verworfen. DE 3623680 offenbart ein anderes, nicht-ionischer Absorptionsmittel.

Die beiden hauptsächlich verwendeten Stoffsysteme haben allerdings auch gravierende Nachteile.

So ist im Absorptionskreislauf beim Stoffsystem Ammoniak-Wasser aufgrund der Flüchtigkeit des Absorptionsmittels Wasser ein Rektifikator zur annähernd vollständigen Trennung beider Stoffe erforderlich, der die Gesamteffizienz des Prozesses verringert. Darüber hinaus ist der Druck, der zum Kondensieren des Ammoniak benötigt wird, relativ hoch, so das die Anlage entsprechend druckstabil ausgelegt werden muss.

Das Arbeitsstoffpaar Lithiumbromid - Wasser weist wie alle anorganisch-salzhaltigen Systeme eine ausgeprägte Mischungslücke auf. Bei zu tiefen unteren Temperaturniveaus kann das Salz aus der Lösung auskristallisieren und die Anlage durch Verstopfen von Leitungen, Ventilen und Pumpen schädigen. Um diesen Fall zu vermeiden, wird nur wenig Wasser aus der Lösung abgenommen, um die Konzentration des Lithiumbromids nicht zu sehr zu erhöhen. Dadurch sinkt die Ausgasungsbreite und senkt dadurch die Effizienz der Anlage. Neben diesem Effekt wird die Leistungsfähigkeit der Apparatur noch dadurch gemindert, daß relativ viel Wasser als Lösemittel für die Absorptionsmedium zwischen Austreiber und Absorber transportiert und gekühlt werden muss. Zudem ist die konzentrierte wässrige Lösung von Lithiumbromid bei erhöhten Temperaturen sehr korrosiv, was die Verwendung spezieller Konstruktionsmaterialien erzwingt. A.D. Lucas et al. (Int. Joumal of Refrigeration 27 (2004) 324 - 330) schlägt daher zur Minderung dieser Problematiken vor, eine Salzmischung aus Lithiumbromid und Kaliumformiat zu verwenden. Hiermit können die genannten Probleme jedoch nur in engen Grenzen gemildert werden. Auch dieses System hat nicht Eingang in die Praxis gefunden.

Die Nachteile der bisher untersuchten Arbeitsstoffpaare bestehen im wesentlichen in einer mangelnden Absorption des Arbeitsstoffes im Absorptionsmittel, in der nicht vollständigen Mischbarkeit des Arbeitsstoffes mit dem Absorptionsmittel und der Flüchtigkeit des Absorptionsmittels. Daneben treten in vielen Fällen starke Korrosionserscheinungen an Konstruktionswerkstoffen auf, was den Einsatz dieser Arbeitsstoffpaare erschwert.

Aus Proceedings of Solar Forum 2001, Solar Energy; The Power to choose April 21-25, 2001 Washington DC - ist bekannt, dass ionische Flüssigkeiten als Wärmespeicher oder zum Wärmetransport verwendet werden. Pure Appl. Chem., Vol 72, pp 1391-1398, 2000 offenbart Mischungen von ionischen Flüssigkeiten mit Wasser.

Aufgabe der vorliegenden Erfindung war es, Arbeitsstoffpaare aufzufinden, die zur Verwendung in Absorptionswärmepumpen, Absorptionskältemaschinen und/oder Wärmetransformatoren geeignet sind und die genannten Nachteile nicht aufweisen.

Weiterhin war es die Aufgabe ein Absorptionsmittel zu finden, das einen ausreichend geringen Dampfdruck aufweist um Stofftrennproblematiken zu vermeiden, bei den zu erwartenden Temperaturen stabil ist, mit dem Arbeitsstoff wie z.B. Wasser oder Ammoniak, unbegrenzt mischbar ist sowie diese in geeigneter Weise absorbieren kann. Darüber hinaus ist es vorteilhaft, ein Absorptionsmittel zu finden, das im gesamten betrachteten Temperaturbereich flüssig ist, um somit Kristallisationsprobleme zu verhindern sowie den gesamten im Absorptionsmittel vorhandenen Arbeitsstoff, wie z. B. Wasser oder Ammoniak, entziehen und nutzen zu können.

Seit Ende der vierziger Jahre sind ionische Flüssigkeiten (engl. "ionic liquids") bekannt. Es handelt sich dabei bevorzugt bei Raumtemperatur und Temperaturen unter Raumtemperatur flüssige Salzschmelzen, die eine neuartige Klasse von Lösungsmitteln mit nicht-molekularem, ionischem Charakter darstellen. Eine gängige Definition ionischer Flüssigkeiten mit Abgrenzung gegen die bekannten Salzschmeizen ist ein Schmelzpunkt von unter 80°C. Andere Stellen nennen hier einen Schmelzpunkt unterhalb Raumtemperatur. Im Rahmen diese Anmeldung sollen unter ionischen Flüssigkeiten solche Salze verstanden werden, die im Reinzustand einen Schmelzpunkt von unterhalb 80°C, bevorzugt unterhalb Raumtemperatur besitzen.

Typische Kation-/Anion- Kombinationen, die zu ionischen Flüssigkeiten führen sind z.B. Dialkylimidazolium, Pyridinium, Ammonium und Phosphonium mit Halogenid, Tetrafluoroborat, Methylsulfat. Daneben sind viele weiter Kombinationen von Kationen und Anionen denkbar, die zu niedrigschmelzenden Salzen führen.

Diese Substanzklasse zeichnet sich durch folgende Eigenschaften aus:
- gute Lösungseigenschaften für viele Stoffe
- praktisch kein Dampfdruck (dadurch keine Azeotropbildung) - Unbrennbarkeit
- großer Flüssigbereich von -60°C bis 400°

Übersichten zu den Ionischen Flüssigkeiten, ihrer Herstellung, Eigenschaften und Verwendung finden sich z.B. in: ionic Liquids in Synthesis, P. Wasserscheid, T. Welton (eds), Wiley; Green Industrial Applications on ionic Liquids (NATO Science Series. li. Mathematics, Physics and Chemistry, 92); Ionic Liquids "Industrial Applications for Green Chemistry" (ACS Symposium Series, 818) by Robin D. Rogers (Editor).

Es wurde nun die oben definierte Verwendung gefunden.

Das Arbeitsstoffpaar, enthält
A) einen Arbeitsstoff; augsgewählt aus Wasser, Methanol oder Ammoniak
B) eine ionische Flüssigkeit.
   Ionische Flüssigkeiten im Sinne der vorliegenden Erfindungen sind Salze der allgemeinen Formel I, II, III
B1)

   [A]ₙ⁺ [Ylⁿ⁻ (I)

   in der n für 1, 2, 3 oder 4 steht, [A]⁺ für ein quartäres Ammonium-Kation, ein Oxonium-Kation, ein Sulfonium-Kation oder ein Phosphonium-Kation und [Y]ⁿ⁻ für ein ein-, zwei-, drei- oder vierwertiges Anion steht;
B2) gemischte Salze der allgemeinen Formeln (II)

   [A¹]⁺[A²]⁺[Y]²⁻ (IIa);

   [A¹]⁺[A²]⁺[A³]⁺[Y]³⁻ (IIb);

   oder

   [A¹]⁺[A²]⁺[A³]⁺[A⁴]⁺[Y]⁴⁻ (IIc),

   wobei [A¹]⁺, [A²]⁺, [A³]⁺ und [A⁴]⁺ unabhängig voneinander aus den für [A]⁺ genannten Gruppen ausgewählt sind und [Y]ⁿ⁻ die unter B1) genannte Bedeutung besitzt; oder
B3) gemischte Salze der allgemeinen Formeln (III)

   [A¹]⁺[A²]⁺[A³]⁺[M¹]⁺[Y]⁴⁻ (IIIa);

   [A¹]⁺[A²]⁺[M¹]⁺[M²]⁺[Y]⁴⁻ (IIIb);

   [A¹]⁺[M¹]⁺[M²]⁺[M³]⁺[Y]⁴⁻ (IIIc);

   [A¹]⁺[A²]⁺[M¹]⁺[Y]³⁻ (IIId);

   [A¹]⁺[M¹]⁺[M²]⁺[Y]³⁻ (IIIe);

   [A¹]⁺[M¹]⁺[Y]²⁻ (IIIf);

   [A¹]⁺[A²]⁺[M⁴]²⁺[Y]⁴⁻ (IIIg);

   [A¹]⁺[M¹]⁺[M⁴]²⁺[Y]⁴⁻ (IIIh);

   [A¹]⁺[M⁵]³⁺[Y]⁴⁻ (IIIi);

   oder

   [A¹]⁺[M⁴]²⁺[Y]³⁻ (IIIj)

   wobei [A¹]⁺, [A²]⁺ und [A³]⁺ unabhängig voneinander aus den für [A]⁺ genannten Gruppen ausgewählt sind, [Y]ⁿ⁻ die unter B1) genannte Bedeutung besitzt und [M¹]⁺, [M²]⁺, [M³]⁺ einwertige Metallkationen, [M⁴]²⁺ zweiwertige Metallkationen und [M⁵]³⁺ dreiwertige Metallkationen bedeuten;
   oder Gemische hiervon;
   welche einen Schmelzpunkt von ≤ 180°C besitzen.

Arbeitsstoffe im Sinne der vorliegenden Erfindung sind Wasser, Methanol oder Ammoniak, insbesondere Ammoniak.

Vorzugsweise besitzen die ionischen Flüssigkeiten einen Schmelzpunkt ≤ 150°C; insbesondere ≤ 80°C.

In einer weiteren bevorzugten Ausführungsform besitzen die ionischen Flüssigkeiten einen Schmelzpunkt in Bereich von - 50°C bis 150°C, insbesondere in einem Bereich von -20°C bis 120°C.

In einer weiteren bevorzugten Ausführungsform besitzen die ionischen Flüssigkeiten einen Schmelzpunkt ≤ 80°C, insbesondere ≤ Raumtemperatur.

Weiterhin bevorzugt sind ionische Flüssigkeiten in denen das Kation [A]⁺ ist bevorzugt ein quartäres Ammonium-Kation, welches im Allgemeinen 1 bis 5, bevorzugt 1 bis 3 und besonders bevorzugt 1 bis 2 Stickstoffatome enthält.

Geeignete Kationen sind beispielsweise die Kationen der allgemeinen Formeln (IVa) bis (IVw) 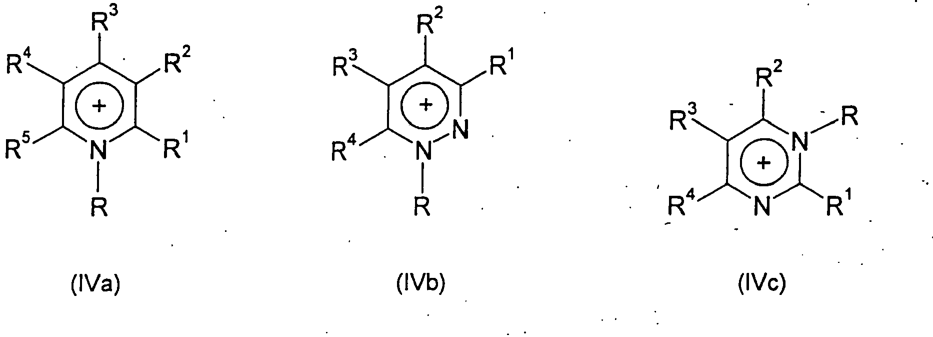 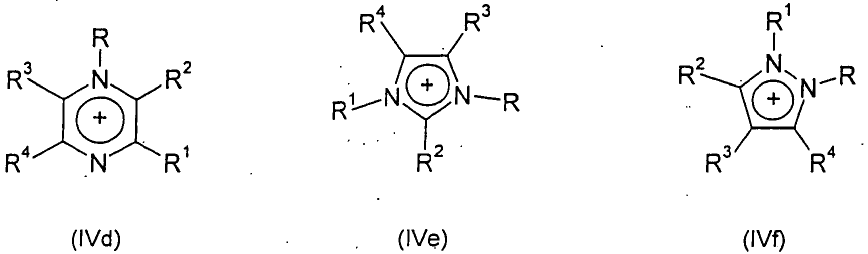 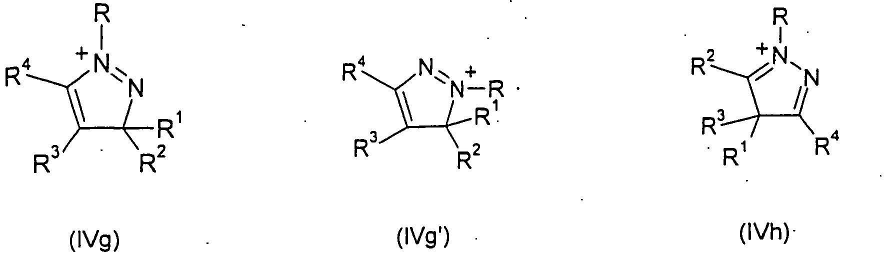 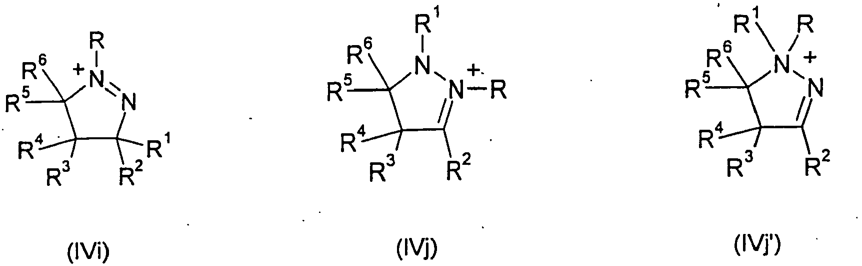 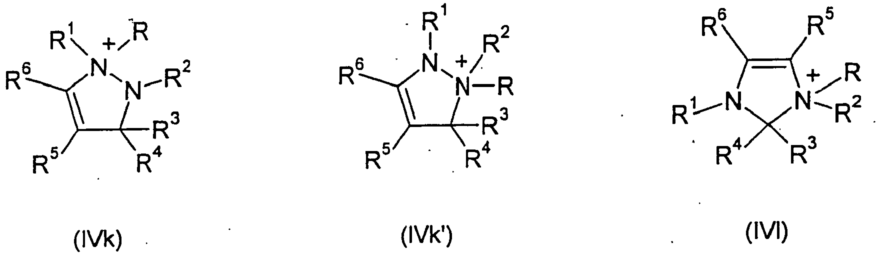 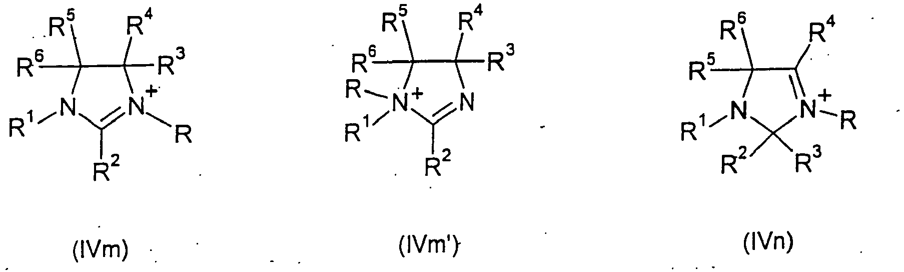 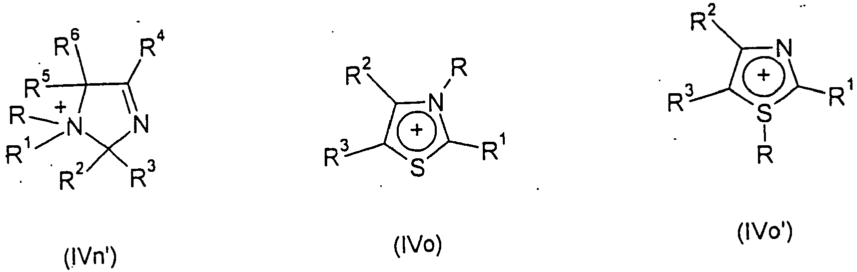 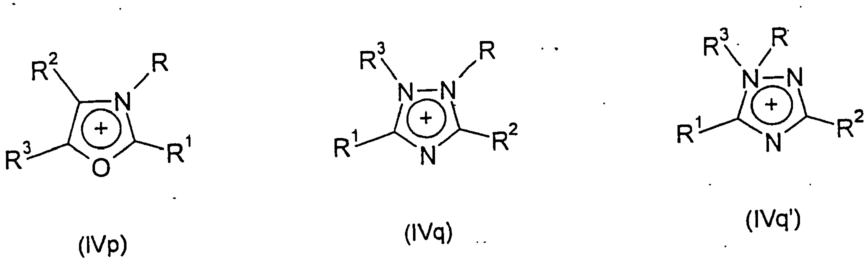 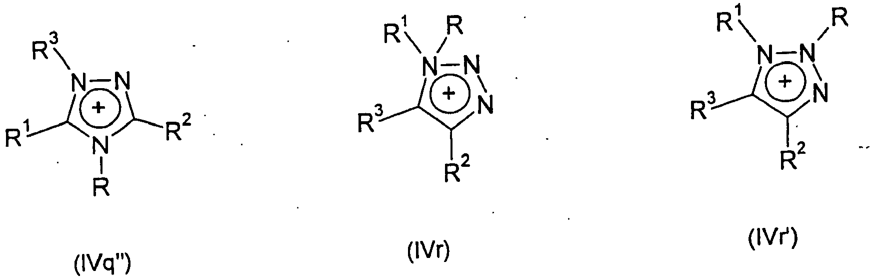 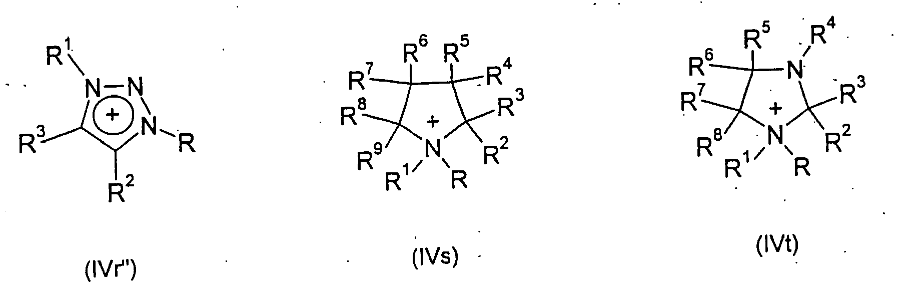 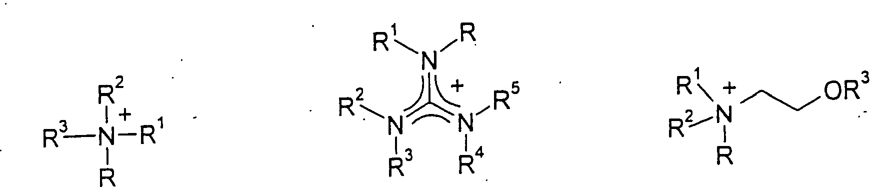 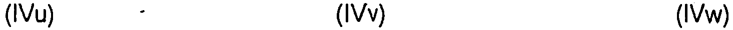 sowie Oligomere, die diese Strukturen enthalten.

Ein weiteres, geeignetes Kation ist auch ein Phosphonium-Kation der allgemeinen Formel (IVx) 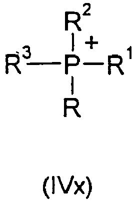 sowie Oligomere, die diese Struktur enthalten.

In den oben genannten Formeln (IVa) bis (IVx) stehen
- der Rest R für einen Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 20 Kohlenstoffatomen; und
- die Reste R¹ bis R⁹ unabhängig voneinander für Wasserstoff, eine Sulfo-Gruppe oder einen Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 20 Kohlenstoffatomen, wobei die Reste R¹ bis R⁹, welche in den oben genannten Formeln (IV) an ein Kohlenstoffatom (und nicht an ein Heteroatom) gebunden sind, zusätzlich auch für Halogen oder eine funktionelle Gruppe stehen können; oder
zwei benachbarte Reste aus der Reihe R¹ bis R⁹ zusammen auch für einen zweibindigen, Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 30 Kohlenstoffatomen.

Als Heteroatome kommen bei der Definition der Reste R und R¹ bis R⁹ prinzipiell alle Heteroatome in Frage, welche in der Lage sind, formell eine -CH₂-, eine-CH=, eine - C≡ oder eine =C= -Gruppe zu ersetzen. Enthält der Kohlenstoff enthaltende Rest Heteroatome, so sind Sauerstoff, Stickstoff, Schwefel, Phosphor und Silizium bevorzugt. Als bevorzugte Gruppen seien insbesondere -O-, -S-, -SO-, -SO₂- -NR'-, -N=, -PR'-, - POR'- und -SiR'₂- genannt, wobei es sich bei den Resten R' um den verbleibenden Teil des Kohlenstoff enthaltenden Rests handelt. Die Reste R¹ bis R⁹ können dabei in den Fällen, in denen diese in den oben genannten Formeln (IV) an ein Kohlenstoffatom (und nicht an ein Heteroatom) gebunden sind, auch direkt über das Heteroatom gebunden sein.

Als funktionelle Gruppen kommen prinzipiell alle funktionellen Gruppen in Frage, welche an ein Kohlenstoffatom oder ein Heteroatom gebunden sein können. Als geeignete Beispiele seien -OH (Hydroxy), =O (insbesondere als Carbonylgruppe), -NH₂ (Amino), =NH (Imino), -COOH (Carboxy), -CONH₂ (Carboxamid), -SO₃H (Sulfo) und -CN (Cyano) genannt. Fuktionelle Gruppen und Heteroatome können auch direkt benachbart sein, so dass auch Kombinationen aus mehreren benachbarten Atomen, wie etwa -O-(Ether), -S- (Thioether), -COO- (Ester), -CONH- (sekundäres Amid) oder -CONR'- (tertiäres Amid), mit umfasst sind, beispielsweise Di-(C₁-C₄-alkyl)-amino, C₁-C₄-Alkyloxycarbonyl oder C₁-C₄-Alkyloxy.

Als Halogene seien Fluor, Chlor, Brom und Iod genannt.

Bevorzugt steht der Rest R für
- unverzweigtes oder verzweigtes, unsubsituiertes oder ein bis mehrfach mit Hydroxy, Halogen, Phenyl, Cyano, C₁- bis C₆-Alkoxycarbonyl und/oder Sulfonsäure subsituiertes C₁- bis C₁₈-Alkyl mit insgesamt 1 bis 20 Kohlenstoffatomen, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, 1-Heptyl,- 1-Octyl, 1-Nonyl, 1-Decyl, 1-Undecyl, 1-Dodecyl, 1-Tetradecyl, 1-Hexadecyl, 1-Octadecyl; 2-Hydroxyethyl, Benzyl, 3-Phenylpropyl, 2-Cyanoethyl, 2-(Methoxycarbonyl)-ethyl, 2-(Ethoxycarbonyl)-ethyl, 2-(n-Butoxy-carbonyl)-ethyl, Trifluormethyl, Difluormethyl, Fluormethyl, Pentafluorethyl, Heptafluorpropyl, Heptafluorisopropyl, Nonafluorbutyl, Nonafluorisobutyl, Undecylfluorpentyl, Undecylfluorisopentyl, 6-Hydroxyhexyl und Propylsulfonsäure;
- Glykole, Butylenglykole und deren Oligomere mit 1 bis 100 Einheiten und einem Wasserstoff oder einem C₁- bis C₈-Alkyl als Endgruppe, wie beispielsweise R^{A}O-(CHR^{B}-CH₂-O)_{P}-CHR^{B}-CH₂- oder R^{A}O-(CH₂CH₂CH₂CH₂O)p-CH₂CH₂CH₂CH₂O- mit R^{A} und R^{B} bevorzugt Wasserstoff, Methyl oder Ethyl und p bevorzugt 0 bis 3, insbesondere 3-Oxabutyl, 3-Oxapentyl, 3,6-Dioxaheptyl, 3,6-Dioxaoctyl, 3,6,9-Trioxadecyl, 3,6,9-Trioxaundecyl, 3,6,9,12-Tetraoxatridecyl und 3,6,9,12-Tetraoxatetradecyl;
- Vinyl; und
- N,N-Di-C₁-C₆-alkylamino, wie beispielsweise N,N-Dimethylamino und N,N-Diethylamino.

Besonders bevorzugt steht der Rest R für unverzweigtes und unsubstituiertes C₁-C₁₈-Alkyl, wie beispielsweise Methyl, Ethyl, 1-Propyl, 1-Butyl, 1-Pentyl, 1-Hexyl, 1-Heptyl, 1-Octyl, 1-Decyl, 1-Dodecyl, 1-Tetradecyl, 1-Hexadecyl, 1-Octadecyl, insbesondere für Methyl, Ethyl, 1-Butyl und 1-Octyl sowie für CH₃O-(CH₂CH₂O)p-CH₂CH₂- und CH₃CH₂O-(CH₂CH₂O)p-CH₂CH₂- mit p gleich 0 bis 3.

Bevorzugt stehen die Reste R¹ bis R⁹ unabhängig voneinander für
- Wasserstoff;
- Halogen;
- eine funktionelle Gruppe;
- gegebenenfalls durch funktionelle Gruppen, Aryl, Alkyl, Aryloxy, Alkyloxy, Halogen, Heteroatome und/oder Heterocyclen substituiertes und/oder durch ein oder mehrere Sauerstoff- und/oder Schwefelatome und/oder ein oder mehrere substituierte oder unsubstituierte Iminogruppen unterbrochenes C₁-C₁₈-Alkyl-,
- gegebenenfalls durch funktionelle Gruppen, Aryl, Alkyl, Aryloxy, Alkyloxy, Halogen, Heteroatome und/oder Heterocyclen substituiertes und/oder durch ein oder mehrere Sauerstoff- und/oder Schwefelatome und/oder ein oder mehrere substituierte oder unsubstituierte Iminogruppen unterbrochenes C₂-C₁₈-Alkenyl;
- gegebenenfalls durch funktionelle Gruppen, Aryl, Alkyl, Aryloxy, Alkyloxy, Halogen, Heteroatome und/oder Heterocyclen substituiertes C₆-C₁₂-Aryl;
- gegebenenfalls durch funktionelle Gruppen, Aryl, Alkyl, Aryloxy, Alkyloxy, Halogen, Heteroatome und/oder Heterocyclen substituiertes C₅-C₁₂-Cycloalkyl;
- gegebenenfalls durch funktionelle Gruppen, Aryl, Alkyl, Aryloxy, Alkyloxy, Halogen, Heteroatome und/oder Heterocyclen substituiertes C₅-C₁₂-Cycloalkenyl; oder
- einen gegebenenfalls durch funktionelle Gruppen, Aryl, Alkyl, Aryloxy, Alkyloxy, Halogen, Heteroatome und/oder Heterocyclen substituierten fünf- bis sechsgliedrigen, Sauerstoff-, Stickstoff- und/oder Schwefelatome aufweisenden Heterocyclus bedeuten; oder
zwei benachbarte Reste zusammen für
- einen ungesättigten, gesättigten oder aromatischen, gegebenenfalls durch funktionelle Gruppen, Aryl, Alkyl, Aryloxy, Alkyloxy, Halogen, Heteroatome und/oder Heterocyclen substituierten und gegebenenfalls durch ein oder mehrere Sauerstoff- und/oder Schwefelatome und/oder ein oder mehrere substituierte oder unsubstituierte Iminogruppen unterbrochenen Ring.

Bei gegebenenfalls durch funktionelle Gruppen, Aryl, Alkyl, Aryloxy, Alkyloxy, Halogen, Heteroatome und/oder Heterocyclen substituiertem C₁- bis C₁₈-Alkyl handelt es sich bevorzugt um Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, 2-Etylhexyl, 2,4,4-Trimethylpentyl, 1,1,3,3-Tetramethylbutyl, 1-Nonyl, 1-Decyl, 1-Undecyl, 1-Dodecyl, 1-Tridecyl, 1-Tetradecyl, 1-Pentadecyl, 1-Hexadecyl, 1-Heptadecyl, 1-Octadecyl, Cyclopentylmethyl, 2-Cyclopentylethyl, 3-Cyclopentylpropyl, Cyclohexylmethyl, 2-Cyclohexylethyl, 3-Cyclohexylpropyl, Benzyl (Phenylmethyl), Diphenylmethyl (Benzhydryl), Triphenylmethyl, 1-Phenylethyl, 2-Phenylethyl, 3-Phenylpropyl, α,α-Dimethylbenzyl, p-Tolylmethyl, 1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonylethyl, 2-Ethoxycarbonylethyl, 2-Butoxycarbonylpropyl, 1,2-Di-(methoxycarbonyl)-ethyl, Methoxy, Ethoxy, Formyl, 1,3-Dioxolan-2-yl, 1,3-Dioxan-2-yl, 2-Methyl-1,3-dioxolan-2-yl, 4-Methyl-1,3-dioxolan-2-yl, 2-Hydroxyethyl, 2-Hydroxypropyl, 3-Hydroxypropyl, 4-Hydroxybutyl, 6-Hydroxyhexyl, 2-Aminoethyl, 2-Aminopropyl, 3-Aminopropyl, 4-Aminobutyl, 6-Aminohexyl, 2-Methylaminoethyl, 2-Methylaminopropyl, 3-Methylaminopropyl, 4-Methylaminobutyl, 6-Methylaminohexyl, 2-Dimethylaminoethyl, 2-Dimethylaminopropyl, 3-Dimethylaminopropyl, 4-Dimethylaminobutyl, 6-Dimethylaminohexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl, 6-Ethoxyhexyl, Acetyl, C_{q}F_{2(q-a)+(1-b)}H_{2a+b} mit q gleich 1 bis 30, 0 ≤ a ≤ q und b = 0 oder 1 (beispielsweise CF₃, C₂F₅, CH₂CH₂-C_{(q-2)}F_{2(q-2)+1}, C₆F₁₃, C₈F₁₇, C₁₀F₂₁, C₁₂F₂₅), Chlormethyl, 2-Chlorethyl, Trichlormethyl, 1,1-Dimethyl-2-chlorethyl, Methoxymethyl, 2-Butoxyethyl, Diethoxymethyl, Diethoxyethyl, 2-Isopropoxyethyl, 2-Butoxypropyl, 2-Octyloxyethyl, 2-Methoxyisopropyl, 2-(Methoxycarbonyl)-ethyl, 2-(Ethoxycarbonyl)-ethyl, 2-(n-Butoxycarbonyl)-ethyl, Butylthiomethyl, 2-Dodecylthioethyl, 2-Phenylthioethyl, 5-Hydroxy-3-oxa-pentyl, 8-Hydroxy-3,6-dioxa-octyl, 11-Hydroxy-3,6,9-trioxa-undecyl, 7-Hydroxy-4-oxa-heptyl, 11-Hydroxy-4,8-dioxa-undecyl, 15-Hydroxy-4,8,12-trioxa-pentadecyl, 9-Hydroxy-5-oxa-nonyl, 14-Hydroxy-5,10-dioxa-tetradecyl, 5-Methoxy-3-oxa-pentyl, 8-Methoxy-3,6-dioxa-octyl, 11-Methoxy-3,6,9-trioxa-undecyl, 7-Methoxy-4-oxa-heptyl, 11-Methoxy-4,8-dioxa-undecyl, 15-Methoxy-4,8,12-trioxa-pentadecyl, 9-Methoxy-5-oxa-nonyl, 14-Methoxy-5,10-dioxa-tetradecyl, 5-Ethoxy-3-oxa-pentyl, 8-Ethoxy-3,6-dioxa-octyl, 11-Ethoxy-3,6,9-trioxa-undecyl, 7-Ethoxy-4-oxa-heptyl, 11-Ethoxy-4,8-dioxa-undecyl, 15-Ethoxy-4,8,12-trioxa-pentadecyl, 9-Ethoxy-5-oxa-nonyl oder 14-Ethoxy-5,10-oxa-tetradecyl.

Bei gegebenenfalls durch funktionelle Gruppen, Aryl, Alkyl, Aryloxy, Alkyloxy, Halogen, Heteroatome und/oder Heterocyclen substituiertes und/oder durch ein oder mehrere Sauerstoff- und/oder Schwefelatome und/oder ein oder mehrere substituierte oder unsubstituierte Iminogruppen unterbrochenes C₂-C₁₈-Alkenyl handelt es sich bevorzugt um Vinyl, 2-Propenyl, 3-Butenyl, cis-2-Butenyl, trans-2-Butenyl oder C_{q}F_{2(q-a)-(1-b)}H_{2a-b} mit q ≤ 30, 0 ≤ a ≤ q und b = 0 oder 1.

Bei gegebenenfalls durch funktionelle Gruppen, Aryl, Alkyl, Aryloxy, Alkyloxy, Halogen, Heteroatome und/oder Heterocyclen substituiertes C₆-C₁₂-Aryl handelt es sich bevorzugt um Phenyl, Tolyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, iso-Propylphenyl, tert.-Butylphenyl, Dodecylphenyl, Methoxyphenyl, Dimethoxyphenyl, Ethoxyphenyl, Hexyloxyphenyl, Methylnaphthyl, Isopropylnaphthyl, Chlornaphthyl, Ethoxynaphthyl, 2,6-Dimethylphenyl, 2,4,6-Trimethylphenyl, 2,6-Dimethoxyphenyl, 2,6-Dichlorphenyl, 4-Bromphenyl, 2-Nitrophenyl, 4-Nitrophenyl, 2,4-Dinitrophenyl, 2,6-Dinitrophenyl, 4-Dimethylaminophenyl, 4-Acetylphenyl, Methoxyethylphenyl, Ethoxymethylphenyl, Methylthiophenyl, Isopropylthiophenyl oder tert.-Butylthiophenyl oder C₆F₍₅₋ₐ₎Hₐ mit 0 ≤ a ≤ 5.

Bei gegebenenfalls durch funktionelle Gruppen, Aryl, Alkyl, Aryloxy, Alkyloxy, Halogen, Heteroatome und/oder Heterocyclen substituiertes C₅- bis C₁₂-Cycloalkyl handelt es sich bevorzugt um Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl, C_{q}F_{2(q-a)-(1-b})H₂ₐ-_{b} mit q ≤ 30, 0 ≤ a ≤ q und b = 0 oder 1 sowie ein gesättigtes oder ungesättigtes bicyclisches System wie z.B. Norbornyl oder Norbornenyl.

Bei gegebenenfalls durch funktionelle Gruppen, Aryl, Alkyl, Aryloxy, Alkyloxy, Halogen, Heteroatome und/oder Heterocyclen substituiertes C₅- C₁₂-Cycloalkenyl handelt es sich bevorzugt um 3-Cyclopentenyl, 2-Cyclohexenyl, 3-Cyclohexenyl, 2,5-Cyclohexadienyl oder CqF_{2(q-a)-3(1-b)}H_{2a-3b} mit q ≤ 30, 0 ≤ a ≤ q und b= 0 oder 1.

Bei einen gegebenenfalls durch funktionelle Gruppen, Aryl, Alkyl, Aryloxy, Alkyloxy, Halogen, Heteroatome und/oder Heterocyclen substituierten fünf- bis sechsgliedrigen, Sauerstoff-, Stickstoff- und/oder Schwefelatome aufweisenden Heterocyclus handelt es sich bevorzugt um Furyl, Thiophenyl, Pyrryl, Pyridyl, Indolyl, Benzoxazolyl, Dioxolyl, Dioxyl, Benzimidazolyl, Benzthiazolyl, Dimethylpyridyl, Methylchinolyl, Dimethylpyrryl, Methoxyfuryl, Dimethoxypyridyl oder Difluorpyridyl.

Bilden zwei benachbarte Reste gemeinsam einen ungesättigten, gesättigten oder aromatischen, gegebenenfalls durch funktionelle Gruppen, Aryl, Alkyl, Aryloxy, Alkyloxy, Halogen, Heteroatome und/oder Heterocyclen substituierten und gegebenenfalls durch ein oder mehrere Sauerstoff- und/oder Schwefelatome und/oder ein oder mehrere substituierte oder unsubstituierte Iminogruppen unterbrochenen Ring, so handelt es sich bevorzugt um 1,3-Propylen, 1,4-Butylen, 1,5-Pentylen, 2-Oxa-1,3-propylen, 1-Oxa-1,3-propylen, 2-Oxa-1,3-propylen, 1-Oxa-1,3-propenylen, 3-Öxa-1,5-pentylen, 1-Aza-1,3-propenylen, 1-C₁-C₄-Alkyl-1-aza-1,3-propenylen, 1,4-Buta-1,3-dienylen, 1-Aza-1,4-buta-1,3-dienylen oder 2-Aza-1,4-buta-1,3-dienylen.

Enthalten die oben genannten Reste Sauerstoff- und/oder Schwefelatome und/oder substituierte oder unsubstituierte Iminogruppen, so ist die Anzahl der Sauerstoff- und/oder Schwefelatome und/oder Iminogruppen nicht beschränkt. In der Regel beträgt sie nicht mehr als 5 in dem Rest, bevorzugt nicht mehr als 4 und ganz besonders bevorzugt nicht mehr als 3.

Enthalten die oben genannten Reste Heteroatome, so befinden sich zwischen zwei Heteroatomen in der Regel mindestens ein Kohlenstoffatom, bevorzugt mindestens zwei Kohlenstoffatome.

Besonders bevorzugt stehen die Reste R¹ bis R⁹ unabhängig voneinander für
- Wasserstoff;
- unverzweigtes oder verzweigtes, unsubsituiertes oder ein bis mehrfach mit Hydroxy, Halogen, Phenyl, Cyano, C₁-C₆-Alkoxycarbonyl und/oder Sulfonsäure subsituiertes C₁-C₁₈-Alkyl mit insgesamt 1 bis 20 Kohlenstoffatomen, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, 1-Heptyl, 1-Octyl, 1-Nonyl, 1-Decyl, 1-Undecyl, 1-Dodecyl; 1-Tetradecyl, 1-Hexadecyl, 1-Octadecyl, 2-Hydroxyethyl, Benzyl, 3-Phenylpropyl, 2-Cyanoethyl, 2-(Methoxycarbonyl)-ethyl, 2-(Ethoxycarbonyl)-ethyl, 2-(n-Butoxy-carbonyl)-ethyl, Trifluormethyl, Difluormethyl, Fluormethyl, Pentafluorethyl, Heptafluorpropyl, Heptafluorisopropyl, Nonafluorbutyl, Nonafluorisobutyl, Undecylfluorpentyl, Undecylfluorisopentyl, 6-Hydroxyhexyl und Propylsulfonsäure;
- Glykole, Butylenglykole und deren Oligomere mit 1 bis 100 Einheiten und einem Wasserstoff oder einem C₁-C₈-Alkyl als Endgruppe, wie beispielsweise R^{A}O-(CHR^{B}-CH₂-O)ₚ-CHR^{B}-CH₂- oder R^{A}O-(CH₂CH₂CH₂CH₂O)ₚ-CH₂CH₂CH₂CH₂O- mit R^{A} und R^{B} bevorzugt Wasserstoff, Methyl oder Ethyl und p bevorzugt 0 bis 3, insbesondere 3-Oxabutyl, 3-Oxapentyl, 3,6-Dioxaheptyl, 3,6-Dioxaoctyl, 3,6,9-Trioxadecyl, 3,6,9-Trioxaundecyl, 3,6,9,12-Tetraoxatridecyl und 3,6,9,12-Tetraoxatetradecyl;
- Vinyl; und
- N,N-Di-C₁-C₆-alkyl-amino, wie beispielsweise N,N-Dimethylamino und N.N-Diethylamino.

Ganz besonders bevorzugt stehen die Reste R¹ bis R⁹ unabhängig voneinander für Wasserstoff oder C₁-C₁₈-Alkyl, wie beispielsweise Methyl, Ethyl, 1-Butyl, 1-Pentyl, 1-Hexyl, 1-Heptyl, 1-Octyl, für Phenyl, für 2-Hydroxyethyl, für 2-Cyanoethyl, für 2-(Methoxycarbonyl)ethyl, für 2-(Ethoxycarbonyl)ethyl, für 2-(n-Butoxycarbonyl)ethyl, für N, N-Dimethylamino, für N, N-Diethylamino, für Chlor sowie für CH₃O-(CH₂CH₂O)ₚ-CH₂CH₂- und CH₃CH₂O-(CH₂CH₂O)ₚCH₂CH₂- mit pgleich 0 bis 3.

Ganz besonders bevorzugt sind ionische Flüssigkeiten, bei denen das Kation [A]⁺ ein Pyridiniumion (IVa) ist, bei dem
- einer der Reste R¹ bis R⁵ Methyl, Ethyl oder Chlor ist und die verbleibenden Reste R¹ bis R⁵ Wasserstoff sind;
- R³ Dimethylamino ist und die verbleibenden Reste R¹, R², R⁴ und R⁵ Wasserstoff sind;
- alle Reste R¹ bis R⁵ Wasserstoff sind;
- R² Carboxy oder Carboxamid ist und die verbleibenden Reste R¹, R², R⁴ und R⁵ Wasserstoff sind; oder
- R¹ und R² oder R² und R³ 1,4-Buta-1,3-dienylen ist und die verbleibenden Reste R¹, R², R⁴ und R⁵ Wasserstoff sind;
und insbesondere ein solches, bei dem
- R¹ bis R⁵ Wasserstoff sind; oder
- einer der Reste R¹ bis R⁵ Methyl oder Ethyl ist und die verbleibenden Reste R¹ bis R⁵ Wasserstoff sind.

Als ganz besonders bevorzugte Pyridiniumionen (IVa) seien genannt 1-Methylpyridinium, 1-Ethylpyridinium, 1-(1-Butyl)pyridinium, 1-(1-Hexyl)pyridinium, 1-(1-Octyl)-pyridinium, 1-(1-Hexyl)-pyridinium, 1-(1-Octyl)-pyridinium, 1-(1-Dodecyl)-pyridinium, 1-(1-Tetradecyl)-pyridinium, 1-(1-Hexadecyl)-pyridinium, 1,2-Dimethylpyridinium, 1-Ethyl-2-methylpyridinium, 1-(1-Butyl)-2-methylpyridinium, 1-(1-Hexyl)-2-methylpyridinium, 1-(1-Octyl)-2-methylpyridinium, 1-(1-Dodecyl)-2-methylpyridinium, 1-(1-Tetradecyl)-2-methylpyridinium, 1-(1-Hexadecyl)-2-methylpyridinium, 1-Methyl-2-ethylpyridinium, 1,2-Diethylpyridinium, 1-(1-Butyl)-2-ethylpyridinium, 1-(1-Hexyl)-2-ethylpyridinium, 1-(1-Octyl)-2-ethylpyridinium, 1-(1-Dodecyl)-2-ethylpyridinium, 1-(1-Tetradecyl)-2-ethylpyridinium, 1-(1-Hexadecyl)-2-ethylpyridinium, 1,2-Dimethyl-5-ethylpyridinium, 1,5-Diethyl-2-methyl-pyridinium, 1-(1-Butyl)-2-methyl-3-ethyl-pyridinium, 1-(1-Hexyl)-2-methyl-3-ethyl-pyridinium und 1-(1-Octyl)-2-methyl-3-ethyl-pyridinium, 1-(1-Dodecyl)-2-methyl-3-ethyl-pyridinium, 1-(1-Tetradecyl)-2-methyl-3-ethyl-pyridinium und 1-(1-Hexadecyl)-2-methyl-3-ethyl-pyridinium.

Ganz besonders bevorzugt sind ionische Flüssigkeiten, bei denen das Kation [A]⁺ ein Pyridaziniumion (IVb) ist, bei dem
- R¹ bis R⁴ Wasserstoff sind; oder
- einer der Reste R¹ bis R⁴ Methyl oder Ethyl ist und die verbleibenden Reste R¹ bis R⁴ Wasserstoff sind.

Ganz besonders bevorzugt sind ionische Flüssigkeiten, bei denen das Kation [A]⁺ ein Pyrimidiniumionen (IVc) ist, bei dem
- R¹ Wasserstoff, Methyl oder Ethyl ist und R² bis R⁴ unabhängig voneinander Wasserstoff oder Methyl sind; oder
- R¹ Wasserstoff, Methyl oder Ethyl ist, R² und R⁴ Methyl sind und R³ Wasserstoff ist.

Ganz besonders bevorzugt sind ionische Flüssigkeiten, bei denen das Kation [A]⁺ ein Pyraziniumionen (IVd) ist, bei dem
- R¹ Wasserstoff, Methyl oder Ethyl ist und R² bis R⁴ unabhängig voneinander Wasserstoff oder Methyl sind;
- R¹ Wasserstoff, Methyl oder Ethyl ist, R² und R⁴ Methyl sind und R³ Wasserstoff ist;
- R¹ bis R⁴ Methyl sind; oder
- R¹ bis R⁴ Methyl Wasserstoff sind.

Ganz besonders bevorzugt sind ionische Flüssigkeiten, bei denen das Kation [A]⁺ ein Imidazoliumion (IVe) ist, bei dem
- R¹ Wasserstoff, Methyl, Ethyl, 1-Propyl, 1-Butyl, 1-Pentyl, 1-Hexyl, 1-Octyl, 2-Hydroxyethyl oder 2-Cyanoethyl und R² bis R⁴ unabhängig, voneinander Wasserstoff, Methyl oder Ethyl sind.

Als ganz besonders bevorzugte Imidazoliumionen (IVe) seien genannt 1-Methylimidazolium, 1-Ethylimidazolium, 1-(1-Butyl)-imidazolium, 1-(1-Octyl)-imidazolium, 1-(1-Dodecyl)-imidazolium, 1-(1-Tetradecyl)-imidazolium, 1-(1-Hexadecyl)-imidazolium, 1,3-Dimethylimidazolium, 1-Ethyl-3-methylimidazolium, 1-(1-Butyl)-3-methylimidazolium, 1-(1-Butyl)-3-ethylimidazolium, 1-(1-Hexyl)-3-methyl-imidazolium, 1-(1-Hexyl)-3-ethylimidazolium, 1-(1-Hexyl)-3-butyl-imidazolium, 1-(1-Octyl)-3-methylimidazolium, 1-(1-Octyl)-3-ethylimidazoliurn, 1-(1-Octyl)-3-butylimidazolium, 1-(1-Dodecyl)-3-methylimidazolium, 1-(1-Dodecyl)-3-ethylimidazolium, 1-(1-Dodecyl)-3-butylimidazolium, 1-(1-Dodecyl)-3-octylimidazolium, 1-(1-Tetradecyl)-3-methylimidazolium, 1-(1-Tetradecyl)-3-ethylimidazolium, 1-(1-Tetradecyl)-3-butylirnidazolium, 1-(1-Tetradecyl)-3-octylimidazolium, 1-(1-Hexadecyl)-3-methylimidazolium, 1-(1-Hexadecyl)-3-ethylimidazolium, 1-(1-Hexadecyl)-3-butylimidazolium, 1-(1-Hexadecyl)-3-octylimidazolium, 1,2-Dimethylimidazolium, 1,2,3-Trimethylimidazolium, 1-Ethyl-2,3-dimethylimidazolium, 1-(1-Butyl)-2,3-dimethylimidazolium, 1-(1-Hexyl)-2,3-dimethyl-imidazolium, 1-(1-Octyl)-2,3-dimethylimidazolium, 1,4-Dimethylimidazolium, 1,3,4-Trimethytimidazolium, 1,4-Dimethyl-3-ethylimidazolium, 3-butylimidazolium, 1,4-Dimethyl-3-octylimidazolium, 1,4,5-Trimethylimidazolium, 1,3,4,5-Tetramethylimidazolium, 1,4,5-Trimethyl-3-ethylimidazolium, 1,4,5-Trimethyl-3-butylimidazolium und 1,4,5-Trimethyl-3-octyl- , imidazolium.

Ganz besonders bevorzugt sind ionische Flüssigkeiten, bei denen das Kation [A]⁺ ein Pyrazoliumion (IVf), (IVg) beziehungsweise (IVg') ist, bei dem
- R¹ Wasserstoff, Methyl oder Ethyl ist und R² bis R⁴ unabhängig voneinander Wasserstoff oder Methyl sind.

Ganz besonders bevorzugt sind ionische Flüssigkeiten, bei denen das Kation [A]⁺ ein Pyrazoliumion (IVh)ist, bei dem
- R¹ bis R⁴ unabhängig voneinander Wasserstoff oder Methyl sind.

Ganz besonders bevorzugt sind ionische Flüssigkeiten, bei denen das Kation [A]⁺ ein 1-Pyrazoliniumion (IVi) ist, bei dem
- unabhängig voneinander R¹ bis R⁶ Wasserstoff oder Methyl sind.

Ganz besonders bevorzugt sind ionische Flüssigkeiten, bei denen das Kation [A]⁺ ein 2-Pyrazoliniumion (IVj') ist, bei dem
- R¹ Wasserstoff, Methyl, Ethyl oder Phenyl ist und R² bis R⁶ unabhängig voneinander Wasserstoff oder Methyl sind.

Ganz besonders bevorzugt sind ionische Flüssigkeiten, bei denen das Kation [A]⁺ ein 3-Pyrazoliniumion (IVk) beziehungsweise (IVk') ist, bei dem
- R¹ und R² unabhängig voneinander Wasserstoff, Methyl, Ethyl oder Phenyl sind und R³ bis R⁶ unabhängig voneinander Wasserstoff oder Methyl sind.

Ganz besonders bevorzugt sind ionische Flüssigkeiten, bei denen das Kation [A]⁺ ein Imidazoliniumion (Ivl) ist, bei dem
- R¹ und R² unabhängig voneinander Wasserstoff, Methyl, Ethyl, 1-Butyl oder Phenyl sind, R³ und R⁴ unabhängig voneinander Wasserstoff, Methyl oder Ethyl sind und R⁵ und R⁶ unabhängig voneinander Wasserstoff oder Methyl sind.

Ganz besonders bevorzugt sind ionische Flüssigkeiten, bei denen das Kation [A]⁺ ein Imidazoliniumion (IVm) beziehungsweise (IVm') ist, bei dem
- R¹ und R² unabhängig voneinander Wasserstoff, Methyl oder Ethyl sind und R³ bis R⁶ unabhängig voneinander Wasserstoff oder Methyl sind.

Ganz besonders bevorzugt sind ionische Flüssigkeiten, bei denen das Kation [A]⁺ ein Imidazoliniumion (IVn) beziehungsweise (IVn') ist, bei dem
- R¹ bis R³ unabhängig voneinander Wasserstoff, Methyl oder Ethyl sind und R⁴ bis R⁶ unabhängig voneinander Wasserstoff oder Methyl sind.

Ganz besonders bevorzugt sind ionische Flüssigkeiten, bei denen das Kation [A]⁺ ein Thiazoliumion (IVo) beziehungsweise (IVo') sowie als Oxazoliumion (IVp) ist, bei dem
- R¹ Wasserstoff, Methyl, Ethyl oder Phenyl ist und R² und R³ unabhängig voneinander Wasserstoff oder Methyl sind.

Ganz besonders bevorzugt sind ionische Flüssigkeiten, bei denen das Kation [A]⁺ ein 1,2,4-Triazoliumion (IVq), (IVq') beziehungsweise (IVq") ist, bei dem
- R¹ und R² unabhängig voneinander Wasserstoff, Methyl, Ethyl oder Phenyl sind und R³ Wasserstoff, Methyl oder Phenyl ist.

Ganz besonders bevorzugt sind ionische Flüssigkeiten, bei denen das Kation [A]⁺ ein 1,2,3-Triazoliumion (IVr), (IVr') beziehungsweise (IVr") ist, bei dem
- R¹ Wasserstoff, Methyl oder Ethyl ist und R² und R³ unabhängig voneinander Wasserstoff oder.Methyl sind, oder R² und R³ zusammen 1,4-Buta-1,3-dienylen ist.

Ganz besonders bevorzugt sind ionische Flüssigkeiten, bei denen das Kation [A]⁺ ein Pyrrolidiniumion (IVs) ist, bei dem
- R¹ Wasserstoff, Methyl, Ethyl oder Phenyl ist und R² bis R⁹ unabhängig voneinander Wasserstoff oder Methyl sind.

Ganz besonders bevorzugt sind ionische Flüssigkeiten, bei denen das Kation [A]⁺ ein Imidazolidiniumion (IVt) ist, bei dem
- R¹ und R⁴ unabhängig voneinander Wasserstoff, Methyl, Ethyl oder Phenyl sind und R² und R³ sowie R⁵ bis R⁸ unabhängig voneinander Wasserstoff oder Methyl sind.

Ganz besonders bevorzugt sind ionische Flüssigkeiten, bei denen das Kation [A]⁺ ein Ammoniumion (IVu) ist, bei dem
- R¹ bis R³ unabhängig voneinander C₁-C₁₈-Alkyl sind; oder
- R¹ bis R³ unabhängig voneinander Wasserstoff oder C₁-C₁₈-Alkyl sind und R⁴ 2-Hydroxyethyl ist; oder
- R¹ und R² zusammen 1,5-Pentylen oder 3-Oxa-1,5-pentylen sind und R³ C₁-C₁₈-Alkyl, 2-Hydroxyethyl oder 2-Cyanoethyl ist.

Als ganz besonders bevorzugte Ammoniumionen (IVu) seien genannt Methyl-tri-(1-butyl)-ammonium, 2-Hydroxyethy-ammonium, N,N-Dimethylpiperidinium und N,N-Dimethylmorpholinium.

Ganz besonders bevorzugt sind ionische Flüssigkeiten, bei denen das Kation [A]⁺ ein Guanidiniumion (IVv) ist, bei dem
- R¹ bis R⁵ Methyl sind.

Als ganz besonders bevorzugtes Guanidiniumion (IVv) sei genannt N,N,N',N',N",N"-Hexamethylguanidinium.

Ganz besonders bevorzugt sind ionische Flüssigkeiten, bei denen das Kation [A]⁺ ein Choliniumion (IVw) ist, bei dem
- R¹ und R² unabhängig voneinander Methyl, Ethyl, 1-Butyl oder 1-Octyl sind und R³ Wasserstoff, Methyl, Ethyl, Acetyl, -SO₂OH oder-PO(OH)₂ ist;
- R¹ Methyl, Ethyl, 1-Butyl oder 1-Octyl ist, R² eine -CH₂-CH₂-OR⁴-Gruppe ist und R³ und R⁴ unabhängig voneinander Wasserstoff, Methyl, Ethyl, Acetyl, -SO₂OH oder -PO(OH)₂ sind; oder
- R' eine -CH₂-CH₂-OR'-Gruppe ist, R² eine -CH₂-CH₂-OR⁵-Gruppe ist und R³ bis R⁵ unabhängig voneinander Wasserstoff, Methyl, Ethyl, Acetyl, -SO₂OH oder - PO(OH)₂ sind.

Ganz besonders bevorzugt sind ionische Flüssigkeiten, bei denen das Kation [A]⁺ ein Phosphoniumion (IVx) ist, bei dem
- R¹ bis R³ unabhängig voneinander C₁-C₁₈-Alkyl, insbesondere Butyl, Isobutyl, 1-Hexyl oder 1-Octyl sind.

Unter den vorstehend genannten Kationen sind die Pyridiniumionen (IVa), Imidazoliumionen (IVe) und Ammoniumionen (IVu) bevorzugt, insbesondere 1-Methylpyridinium, 1-Ethylpyridinium, 1-(1-Butyl)pyridinium, 1-(1-Hexyl)pyridinium, 1-(1-Octyl)pyridinium, 1-(1-Hexyl)-pyridinium, 1-(1-Octyl)-pyridinium, 1-(1-Dodecyl)-pyridinium, 1-(1-Tetradecyl)-pyridinium, 1-(1-Hexadecyl)-pyridinium, 1,2-Dimethylpyridinium, 1-Ethyl-2-methylpyridinium, 1-(1-Butyl)-2-methylpyridinium, 1-(1-Hexyl)-2-methyipyridinium, 1-(1-Octyl)-2-methylpyridinium, 1-(1-Dodecyl)-2-methylpyridinium, 1-(1-Tetradecyl)-2-methylpyridinium, 1-(1-Hexadecyl)-2-methylpyridinium, 1-Methyl-2-ethylpyridinium, 1,2-Diethylpyridinium, 1-(1-Butyl)-2-ethylpyridinium, 1-(1-Hexyl)-2-ethylpyridinium, 1-(1-Octyl)-2-ethylpyridinium, 1-(1-Dodecyl)-2-ethylpyridinium, 1-(1-Tetradecyl)-2-ethylpyridinium, 1-(1-Hexadecyl)-2-ethylpyridinium, 1,2-Dimethyl-5-ethyl-pyridinium, 1,5-Diethyl-2-methyl-pyridinium, 1-(1-Butyl)-2-methyl-3-ethyl-pyridinium, 1-(1-Hexyl)-2-methyl-3-ethyl-pyridinium, 1-(1-Octyl)-2-methyl-3-ethyl-pyridinium, 1-(1-Dodecyl)-2-methyl-3-ethyl-pyridinium, 1-(1-Tetradecyl)-2-methyl-3-ethyl-pyridinium, 1-(1-Hexa-decyl)-2-methyl-3-ethyl-pyridinium, 1-Methylimidazolium, 1-Ethylimidazolium, 1-(1-Butyl)-imidazolium, 1-(1-Octyl)-imidazolium, 1-(1-Dodecyl)-imidazolium, 1-(1-Tetradecyl)-imidazolium, 1-(1-Hexadecyl)-imidazolium, 1,3-Dimethylimidazolium, 1-Ethyl-3-methylimidazolium, 1-(1-Butyl)-3-methylimidazolium, 1-(1-Hexyl)-3-methyl-imidazolium, 1-(1-Octyl)-3-methylimidazolium, 1-(1-Dodecyl)-3-methylimidazolium, 1-(1-Tetradecyl)-3-methylimidazolium, 1-(1-Hexadecyl)-3-methylimidazolium, 1,2-Dimethylimidazolium, 1,2,3-Trimethylimidazolium, 1-Ethyl-2,3-dimethylimidazolium, 1-(1-Butyl)-2,3-dimethylimidazolium, 1-(1-Hexyl)-2,3-dimethyl-imidazolium und 1-(1-Octyl)-2,3-dimethylimidazolium, 1,4-Dimethylimidazolium, 1,3,4-Trimethylimidazolium, 1,4-Dimethyl-3-ethylimidazolium, 3-butylimidazolium, 1,4-Dimethyl-3-octylimidazolium, 1,4,5-Trimethylimidazolium, 1,3,4,5-Tetramethylimidazolium, 1,4,5-Trimethyl-3-ethylimidazolium, 1,4,5-Trimethyl-3-butylimidazolium, 1,4,5-Trimethyl-3-octylimidazolium und 2-Hydroxyethy-animonium.

Bei den in den Formeln (IIIa) bis (IIIj) genannten Metallkationen [M¹]⁺, [M²]⁺, [M³]⁺, [M⁴]²⁺ und [M⁵]³⁺ handelt es sich im Allgemeinen um Metallkationen der 1., 2., 6., 7., 8., 9., 10., 11., 12. und 13. Gruppe des Periodensystems. Geeignete Metallkationen sind beispielsweise Li⁺, Na⁺, K⁺, Cs⁺, Mg²⁺, Ca²⁺, Ba²⁺, Cr³⁺, Fe²⁺, Fe³⁺, Co²⁺, Ni²⁺, Cu²⁺, Ag⁺, Zn²⁺ und Al³⁺.

Als Anionen sind prinzipiell alle Anionen einsetzbar, welche in Verbindung mit dem Kation zu einer ionische Flüssigkeit führen.

Das Anion [Y]ⁿ⁻ der ionischen Flüssigkeit ist beispielsweise ausgewählt aus:
- der Gruppe der Halogenide und halogenhaltigen Verbindungen der Formeln: F⁻, Cl⁻, Br⁻, l⁻, BF₄⁻, PF₆⁻, AlCl₄⁻, Al₂Cl₇⁻, Al₃Cl₁₀⁻, AlBr₄⁻, FeCl₄⁻, BCl₄⁻, SbF₆⁻, AsF₆⁻, ZnCl₃⁻, SnCl₃⁻, CuCl₂⁻, CF₃SO₃⁻, (CF₃SO₃)₂N⁻, CF₃CO₂⁻, CCl₃CO₂⁻, CN⁻, SCN⁻, OCN⁻, NO²⁻, NO³⁻, N(CN)⁻;
- der Gruppe der Sulfate, Sulfite und Sulfonate der allgemeinen Formeln: SO₄²⁻, HSO₄⁻, SO₃²⁻, HSO₃⁻, R^{a}OSO₃⁻, R^{a}SO₃⁻;
- der Gruppe der Phosphate der allgemeinen Formeln: PO₄³⁻, HPO₄²⁻, H₂PO₄⁻, R^{a}PO₄²⁻, HR^{a}PO₄⁻, R^{a}R^{b}PO₄⁻;
- der Gruppe der Phosphonate und Phosphinate der allgemeinen Formel: R^{a}HPO₃⁻,R^{a}R^{b}PO₂⁻, R^{a}R^{b}PO₃⁻;
- der Gruppe der Phosphite der allgemeinen Formeln: PO₃³⁻, HPO₃²⁻, H₂PO₃⁻, R^{a}PO₃²⁻, R^{a}HPO₃⁻, R^{a}R^{b}PO₃⁻;
- der Gruppe der Phosphonite und Phosphinite der allgemeinen Formel: R^{a}R^{b}PO₂⁻, R^{a}HPO₂⁻, R^{a}R^{b}PO⁻, R^{a}HPO-;
- der Gruppe der Carboxylate der allgemeinen Formeln: R^{a}COO⁻;
- der Gruppe der Borate der allgemeinen Formeln: BO₃³⁻, HBO₃²⁻, H₂BO₃⁻, R^{a}R^{b}BO₃⁻, R^{a}HBO₃⁻, R^{a}BO₃²⁻, B(OR^{a})(OR^{b})(OR^{c})(OR^{d})⁻, B(HSO₄)⁻, B(R^{a}SO4)⁻;
- der Gruppe der Boronate der allgemeinen Formeln: R^{a}BO₂²⁻, R^{a}R^{b}BO⁻;
- der Gruppe der Carbonate und Kohlensäureester der allgemeinen Formeln: HCO₃⁻, CO₃²⁻, R^{a}CO₃⁻;
- der Gruppe der Silikate und Kieselsäuresäureester der allgemeinen Formeln: SiO₄⁴⁻, HSiO₄³⁻,H₂SiO₄²⁻, H₃SiO₄⁻, R^{a}SiO₄³⁻, R^{a}R^{b}SiO₄²⁻, R^{a}R^{b}R^{c}SiO₄⁻, HR^{a}SiO₄²⁻, H₂R^{a}SiO₄⁻, HR^{a}R^{b}SiO₄⁻;
- der Gruppe der Alkyl- bzw. Arylsilan-Salze der allgemeinen Formeln: R^{a}SiO₃³⁻, R^{a}R^{b}SiO₂²⁻, R^{a}R^{b}R^{c}SiO⁻, R^{a} R^{b}R^{c}SiO₃⁻, R^{a}R^{b}R^{c}SiO₂⁻, R^{a}R^{b}SiO₃²⁻;
- der Gruppe der Carbonsäureimide, Bis(sulfonyl)imide und Sulfonylimide der allgemeinen Formeln: 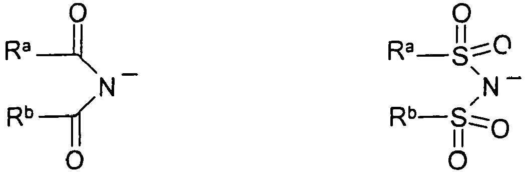
- der Gruppe der Methide der allgemeinen Formel: 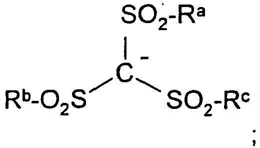
- der Gruppe der Alkoxide und Aryloxide der allgemeinen Formeln: R^{a}O⁻;
- der Gruppe der Halometallate der allgemeinen Formel

   [MᵣHalₜ]^{s-},

   wobei M für ein Metall und Hal für Fluor, Chlor, Brom oder lod steht, r und t ganze positive Zahlen sind und die Stöchiometrie des Komplexes angeben und s eine ganze positive Zahl ist und die Ladung des Komplexes angibt;
- der Gruppe der Sulfide, Hydrogensulfide, Polysulfide, Hydrogenpolysulfide und Thiolate der allgemeinen Formeln:

   S²⁻, HS⁻, [Sᵥ]²⁻, [HSᵥ]⁻, (R^{a}S]⁻,

   wobei v eine ganze positive Zahl von 2 bis 10 ist;
- der Gruppe der komplexen Metallionen wie Fe(CN)₆³⁻, Fe(CN)₆⁴⁻, MnO₄⁻, Fe(CO)₄⁻.

Darin bedeuten R^{a}, R^{b}, R^{C} und R^{d} unabhängig voneinander jeweils
- Wasserstoff;
- C₁-C₃₀-Alkyl und deren aryl-, heteroaryl-, cycloalkyl-, halogen-, hydroxy-, amino-, carboxy-, formyl-, -O-, -CO-, -CO-O- oder -CO-N< substituierte Komponenten, wie_beispielsweise Methyl, Ethyl, 1-Propyl, 2-Propyl, 1-Butyl, 2-Butyl, 2-Methyl-1-propyl (Isobutyl), 2-Methyl-2-propyl (tert₁-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, Nonyl, Decyl, Undecyl, Dodecyl, Tridecyl, Tetradecyl, Pentadecyl, Hexadecyl, Heptadecyl, Octadecyl, Nonadecyl, Icosyl, Henicosyl, Docosyl, Tricosyl, Tetracosyl, Pentacosyl, Hexacosyl, Heptacosyl, Octacosyl, Nonacosyl, Triacontyl, Phenylmethyl (Benzyl), Diphenylmethyl, Triphenylmethyl, 2-Phenylethyl, 3-Phenylpropyl, Cyclopentylmethyl, 2-Cyclopentylethyl, 3-Cyclopentylpropyl, Cyclohexylmethyl, 2-Cyclohexylethyl, 3-Cyclohexylpropyl, Methoxy, Ethoxy, Formyl, Acetyl oder C_{q}F_{2(q-a)+(1-b)}H_{2a+b} mit q ≤ 30, 0 ≤ a ≤ q und b = 0 oder 1 (beispielsweise CF₃, C₂F₅, CH₂CH₂-C_{(q-2)}F_{2(q-2)+1}, C₆F₁₃, C₈F₁₇, C₁₀F₂₁, C₁₂F₂₅);
- C₃-C₁₂-Cycloalkyl und deren aryl-, heteroaryl-, cycloalkyl-, halogen-, hydroxy-, amino-, carboxy-, formyl-, -O-, -CO- oder -CO-O-substituierte Komponenten, wie beispielsweise Cyclopentyl, 2-Methyl-1-cyclopentyl, 3-Methyl-1-cyclopentyl, Cyclohexyl, 2-Methyl-1-cyclohexyl, 3-Methyl-1-cyclohexyl, 4-Methyl-1-cyclohexyl oder C_{q}F_{2(q-a)-(1-b})H_{2a-b} mit q ≤ 30, 0 ≤ a ≤ q und b = 0 oder 1;
- C₂-C₃₀-Alkenyl und deren aryl-, heteroaryl-, cycloalkyl-, halogen-, hydroxy-, amino-, carboxy-, formyl-, -O-, -CO- oder-CO-O-substituierte Komponenten, wie beispielsweise 2-Propenyl, 3-Butenyl, cis-2-Butenyl, trans-2-Butenyl oder C_{q}F_{2(q-a)-(1-b})H_{2a-b} mit q ≤ 30, 0 ≤ a ≤ q und b = 0 oder 1;
- C₃-C₁₂-Cycloalkenyl und deren aryl-, heteroaryl-, cycloalkyl-, halogen-, hydroxy-, amino-, carboxy-, formyl-, -O-, -CO- oder -CO-O-substituierte Komponenten, wie beispielsweise 3-Cyclopentenyl, 2-Cyclohexenyl, 3-Cyclohexenyl, 2,5-Cyclohexadienyl oder C_{q}F_{2(q-a)-3(1-b)}H_{2a-3b} mit q ≤ 30, 0 ≤ a ≤ q und b = 0 oder 1;
- Aryl oder Heteroaryl mit 2 bis 30 Kohlenstoffatomen und deren alkyl-, aryl-, heteroaryl-, cycloalkyl-, halogen-, hydroxy-, amino-, carboxy-, formyl-, -O-, -CO- oder -CO-O-substituierte Komponenten, wie beispielsweise Phenyl, 2-Methyl-phenyl (2-Tolyl), 3-Methyl-phenyl (3-Tolyl), 4-Methyl-phenyl, 2-Ethyl-phenyl, 3-Ethyl-phenyl, 4-Ethyl-phenyl, 2,3-Dimethyl-phenyl, 2,4-Dimethyl-phenyl, 2,5-Dimethyl-phenyl, 2,6-Dimethyl-phenyl, 3,4-Dimethyl-phenyl, 3,5-Dimethyl-phenyl, 4-Phenyl-phenyl, 1-Naphthyl, 2-Naphthyl, 1-Pyrrolyl, 2-Pyrrolyl, 3-Pyrrolyl, 2-Pyridinyl, 3-Pyridinyl, 4-Pyridinyl oder C₆F₍₅₋ₐ₎Hₐ mit 0 ≤ a ≤ 5; oder
- zwei Reste einen ungesättigten, gesättigten oder aromatischen, gegebenenfalls durch funktionelle Gruppen, Aryl, Alkyl, Aryloxy, Alkyloxy, Halogen, Heteroatome und/oder Heterocyclen substituierten und gegebenenfalls durch ein oder mehrere Sauerstoff- und/oder Schwefelatome und/oder ein oder mehrere substituierte oder unsubstituierte Iminogruppen unterbrochenen Ring.

Ganz besonders bevorzugte Anionen sind Chlorid; Bromid; Iodid; Thiocyanat; Hexafluorophosphat; Trifluormethansulfonat; Methansulfonat; Formiat; Acetat; Mandelat; Nitrat; Nitrit; Trifluoracetat; Sulfat; Hydrogensulfat; Methylsulfat; Ethylsulfat; 1-Propylsulfat; 1-Butylsulfat; 1-Hexylsulfat; 1-Octylsulfat; Phosphat; Dihydrogenphosphat; Hydrogenphosphat; C₁-C₄-Dialkylphosphate; Propionat; Tetrachloroaluminat; Al₂Cl₇⁻; Chlorozinkat; Chloroferrat; Bis(trifluoromethylsulfonyl)imid; Bis(pentafluoroethylsulfonyl)imid; Bis(methylsulfonyl)imid; Bis(p-Tolylsulfonyl)imid; Tris(trifluoromethylsulfonyl)methid; Bis(pentafluoroethylsulfonyl)methid; p-Tolylsulfonat; Tetracarbonylcobaltat; Dimethylenglykolmonomethylethersulfat; Oleat; Stearat; Acrylat; Methacrylat; Maleinat; Hydrogencitrat; Vinylphosphonat; Bis(pentafluoroethyl)phosphinat; Borate wie Bis[salicylato(2-)]borat, Bis[oxalato(2-)]borat, Bis[1,2-benzoldiolato(2-)-O,O']borat, Tetracyanoborat, Tetrafluoroborat; Dicyanamid; Tris(pentafluoroethyl)trifluorophosphat; Tris(heptafluoropropyl)trifluorophosphat, cyclische Arylphosphate wie Brenzcatecholphosphat (C₆H₄O₂)P(O)O⁻ und Chlorocobaltat.

Ganz besonders bevorzugte Anionen sind

Chlorid, Bromid, Hydrogensulfat, Tetrachloroaluminat, Thiocyanat, Methylsulfat, Ethylsulfat, Methansulfonat, Formiat, Acetat, Dimethylphosphat, Diethylphosphat, p-Tolylsulfonat, Tetrafluoroborat und Hexafluorophosphat.

Insbesondere bevorzugt sind ionische Flüssigkeiten, die als Kation

Methyl-tri-(1-butyl)-ammonium, 2-Hydroxyethylammonium, 1-Methylimidazolium, 1-Ethylimidazolium, 1-(1-Butyl)-imidazolium, 1-(1-Octyl)-imidazolium, 1-(1-Dodecyl)-imidazolium, 1-(1-Tetradecyl)-imidazolium, 1-(1-Hexadecyl)-imidazolium, 1,3-Dimethylimidazolium, 1-Ethyl-3-methylimidazolium, 1-(1-Butyl)-3-methylimidazolium, 1-(1-Butyl)-3-ethylimidazolium, 1-(1-Hexyl)-3-methyl-imidazolium, 1-(1-Hexyl)-3-ethylimidazolium, 1-(1-Hexyl)-3-butyl-imidazolium, 1-(1-Octyl)-3-methylimidazolium, 1-(1-Octyl)-3-ethylimidazolium, 1-(1-Octyl)-3-butylimidazolium, 1-(1-Dodecyl)-3-methylimidazolium, 1-(1-Dodecyl)-3-ethylimidazolium, 1-(1-Dodecyl)-3-butylimidazolium, 1-(1-Dodecyl)-3-octylimidazolium, 1-(1-Tetradecyl)-3-methylimidazolium, 1-(1-Tetradecyl)-3-ethylimidazolium, 1-(1-Tetradecyl)-3-butylimidazolium, 1-(1-Tetradecyl)-3-octylimidazolium, 1-(1-Hexadecyl)-3-methylimidazolium, 1-(1-Hexadecyl)-3-ethylimidazolium, 1-(1-Hexadecyl)-3-butylimidazolium, 1-(1-Hexadecyl)-3-octylimidazolium, 1,2-Dimethylimidazolium, 1,2,3-Tri-methylimidazolium, 1-Ethyl-2,3-dimethylimidazoliuin, 1-(1-Butyl)-2,3-dimethylimidazolium, 1-(1-Hexyl)-2,3-dimethyl-imidazolium, 1-(1-Octyl)-2,3-dimethylimidazolium, 1,4-Dimethylimidazolium, 1,3,4-Trimethylimidazolium, 1,4-Dimethyl-3-ethylimidazolium, 3-butylimidazolium, 1,4-Dimethyl-3-octylimidazolium, 1,4,5-Trimethylimidazolium, 1,3,4,5-Tetramethylimidazolium, 1,4,5-Trimethyl-3-ethylimidazolium, 1,4,5-Trimethyl-3-butylimidazolium oder 1,4,5-Trimethyl-3-octylimidazolium;
und als Anion

Chlorid, Bromid, Hydrogensulfat, Tetrachloroaluminat, Thiocyanat, Methylsulfat, Ethylsulfat, Methansulfonat, Formiat, Acetat, Dimethylphosphat, Diethylphosphat, p-Tolylsulfonat, Tetrafluoroborat und Hexafluorophosphat;
enthalten.

Weiterhin insbesondere bevorzugt sind folgende ionische Flüssigkeiten:
1,3-Dimethylimidazolium-methylsulfat, 1,3-Dimethylimidazolium-hydrogensulfat, 1,3-Dimethylimidazolium-dimethylphosphat, 1-Ethyl-3-methylimidazolium-methylsulfat, 1-Ethyl-3-methylimidazolium-hydrogensulfat, 1-Ethyl-3-methylimidazolium thiocyanat, 1-Ethyl-3-methylimidazolium acetat, 1-Ethyl-3-methylimidazolium methansulfonat, 1-Ethyl-3-methylimidazolium diethylphosphat, 1-(1-Butyl)-3-methylimidazolium methylsulfat, 1-(1-Butyl)-3-methylimidazolium hydrogensulfat, 1-(1-Butyl)-3-methylimidazolium thiocyanat, 1-(1-Butyl)-3-methylimidazolium acetat, 1-(1-Butyl)-3-methylimidazolium methansulfonat, 1-(1-Dodecyl)-3-methylimidazolium methylsulfat, 1-(1-Dodecyl)-3-methylimidazolium hydrogensulfat, 1-(1-Tetradecyl)-3-methylimidazolium methylsulfat, 1-(1-Tetradecyl)-3-methylimidazolium hydrogensulfat, 1-(1-Hexadecyl)-3-methylimidazolium methylsulfat oder 1-(1-Hexadecyl)-3-methylimidazolium hydrogensulfat oder 2-Hydroxyethylammonium formiat.
Weiterhin bevorzugt sind ionische Flüssigkeiten [A]ₙ⁺ [Y]ⁿ⁻ mit n=1 oder 2 sowie entsprechende Salze, die auf das Dimere von [A]ₙ⁺ mit n=1 oder 2 zurückgehen, wobei das Kation [A]⁺ ausgewählt ist aus den Kationen der allgemeinen Formel (IVa), (IV e), (IVf), (IVg), (IVg'), (IVh), (IVm) wobei NR¹ durch Sauerstoff ersetzt ist, (IVq), (IVq"), (IVr'), (IVv), (IVu), (Ivx) insbesonders aus 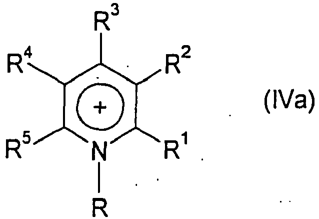
wobei die Reste -
- R: Wasserstoff;
lineares oder verzweigtes C₁-C₂₀-Alkyl, welches eine oder mehrere Gruppen ausgewählt aus Halogen, Hydroxyl, Cyano, Amino oder Mercapto tragen kann; oder
-(R^{x}-X)_{w}-R^{Y} mit w=1-10, R^{x} lineares oder verzweigtes C₁-C₂₀-Alkyl, R^{y} Wasserstoff oder lineares oder verzweigtes C₁-C₁₀-Alkyl, und X ist eine Ether-, Thioether-, Ester-, Silöxan- oder Amidgruppe;
- R¹, R², R³, R⁴, R⁵: unabhängig voneinander Wasserstoff;
Halogenid, Hydroxy,
lineares oder verzweigtes C₁-C₂₀-Alkyl, welches eine oder mehrere Gruppen ausgewählt aus Halogen, Hydroxyl, Cyano, Amino oder Mercapto tragen kann; -(R^{x}-X)_{w}-R^{Y}.mit w=1-10, R^{x} lineares oder verzweigtes C₁-C₂₀-Alkyl, R^{y} Wasserstoff oder lineares oder verzweigtes C₁-C₁₀-Alkyl, und X ist eine Ether-, Thioether-, Ester-, Siloxan- oder Amidgruppe;
sind; 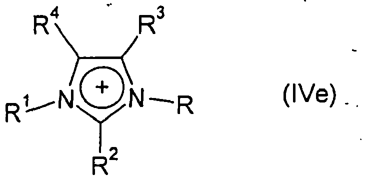 wobei die Reste
- R und R¹: unabhängig voneinander Wasserstoff; lineares oder verzweigtes C₁-C₂₀-Alkyl, welches eine oder mehrere Gruppen ausgewählt aus Halogen, Hydroxyl, Cyano, Amino oder Mercapto tragen kann; oder
-(R^{x}-X)_{w}-R^{Y} mit w=1-10, R^{x} lineares oder verzweigtes C₁-C₂₀-Alkyl, R^{y} Wasserstoff oder lineares oder verzweigtes C₁-C₁₀-Alkyl, und X ist eine Ether-, Thioether-, Ester-, Siloxan- oder Amidgruppe;
- R², R³ und R⁴: unabhängig voneinander Wasserstoff, Halogenid, Hydroxy, lineares oder verzweigtes C₁-C₂₀-Alkyl, welches eine oder mehrere Gruppen ausgewählt aus Halogen, Hydroxyl, Cyano , Amino oder Mercapto tragen kann; -(R^{x}-X)_{w}-R^{Y} mit w=1-10, R^{x} lineares oder verzweigtes C₁-C₂₀-Alkyl, R^{y} Wasserstoff oder lineares oder verzweigtes C₁-C₁₀-Alkyl, und X ist eine Ether-, Thioether-, Ester-, Siloxan- oder Amidgruppe;
sind; 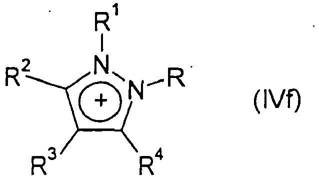 wobei die Reste
- R, R¹: unabhängig voneinander Wasserstoff; lineares oder verzweigtes C₁-C₂₀-Alkyl, welches eine oder mehrere Gruppen ausgewählt aus Halogen, Hydroxyl, Cyano, Amino oder Mercapto tragen kann; oder -(R^{x}-X)_{w}-R^{Y} mit w=1-10, R^{x} lineares oder verzweigtes C₁-C₂₀-Alkyl, R^{y} Wasserstoff oder lineares oder verzweigtes C₁-C₁₀-Alkyl, und X ist eine Ether-, Thioether-, Ester-, Siloxan- oder Amidgruppe;
- R², R³, R⁴: unabhängig voneinander Wasserstoff; Halogenid, Hydroxy, lineares oder verzweigtes C₁-C₂₀-Alkyl, welches eine oder mehrere Gruppen ausgewählt aus Halogen, Hydroxyl, Cyano , Amino oder Mercapto tragen kann; -(R^{x}-X)_{w}-R^{Y} mit w=1-10, R^{x} lineares oder verzweigtes C₁-C₂₀-Alkyl, R^{y} Wasserstoff oder lineares oder verzweigtes C₁-C₁₀-Alkyl, und X ist eine Ether-, Thioether-, Ester-, Siloxan- oder Amidgruppe;
sind; 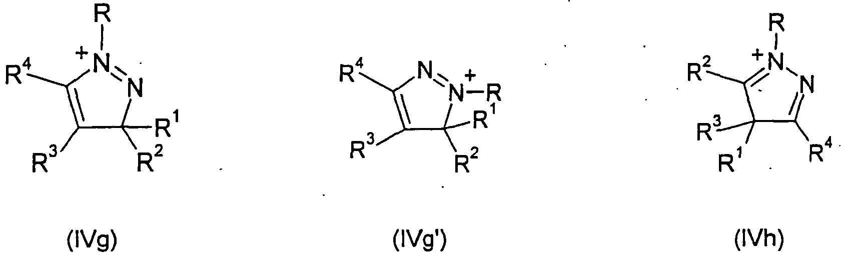 wobei die Reste
- R: Wasserstoff; lineares oder verzweigtes C₁-C₂₀-Alkyl, welches eine oder mehrere Gruppen ausgewählt aus Halogen, Hydroxyl, Cyano, Amino oder Mercapto tragen kann; oder
-(R^{x}-X)_{w}-R^{Y} mit w=1-10, R^{x} lineares oder verzweigtes C₁-C₂₀-Alkyl, R^{y} Wasserstoff oder lineares oder verzweigtes C₁-C₁₀-Alkyl, und X ist eine Ether-, Thioether-, Ester-, Siloxan- oder Amidgruppe;
- R¹, R², R³, R⁴: unabhängig voneinander Wasserstoff; Halogenid, Hydroxy, lineares oder verzweigtes C₁-C₂₀-Alkyl, welches eine oder mehrere Gruppen ausgewählt aus Halogen, Hydroxyl, Cyano , Amino oder Mercapto tragen kann; -(R^{x}-X)_{w}-R^{Y} mit w=1-10, R^{x} lineares oder verzweigtes C₁-C₂₀-Alkyl, R^{y} Wasserstoff oder lineares oder verzweigtes C₁-C₁₀-Alkyl, und X ist eine Ether-, Thioether-, Ester-, Siloxan- oder Amidgruppe;
sind; 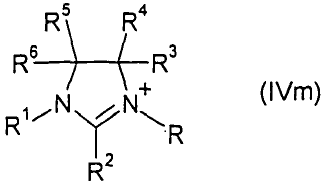 wobei die Reste
- R: Wässerstoff; lineares oder verzweigtes C₁-C₂₀-Alkyl, welches eine oder mehrere Gruppen ausgewählt aus Halogen, Hydroxyl, Cyano, Amino oder Mercapto tragen kann; oder
-(R^{x}-X)_{w}-R^{Y} mit w=1-10, R^{x} lineares oder verzweigtes C₁-C₂₀-Alkyl, R^{y} Wasserstoff oder lineares oder verzweigtes C₁-C₁₀-Alkyl, und X ist eine Ether-, Thioether-, Ester-, Siloxan- oder Amidgruppe;
- R²,: unabhängig voneinander Wasserstoff; Halogenid, Hydroxy,
- R³, R⁴, R⁵und R⁶: lineares oder verzweigtes C₁-C₂₀-Alkyl, welches eine oder mehrere Gruppen ausgewählt aus Halogen, Hydroxyl, Cyano , Amino oder Mercapto tragen kann; -(R^{x}-X)_{w}-R^{Y} mit w=1-10, R^{x} lineares oder verzweigtes C₁-C₂₀-Alkyl, R^{y} Wasserstoff oder lineares oder verzweigtes C₁-C₁₀-Alkyl, und X ist eine Ether-, Thioether-, Ester-, Siloxan- oder Amidgruppe;
sind und N-R¹ durch Sauerstöff ersetzt ist; 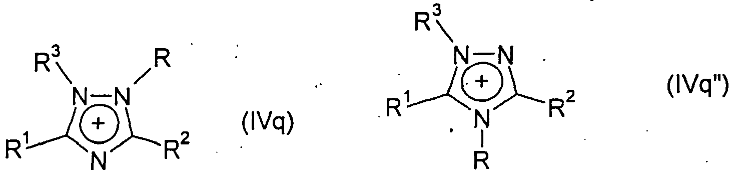 wobei die Reste
- R und R³: unabhängig voneinander Wasserstoff; lineares oder verzweigtes C₁-C₂₀-Alkyl, welches eine oder mehrere Gruppen ausgewählt aus Halogen, Hydroxyl, Cyano, Amino oder Mercapto tragen kann; oder -(R^{x}-X)_{w}-R^{Y} mit w=1-10, R^{x} lineares oder verzweigtes C₁-C₂₀-Alkyl, R^{y} Wasserstoff oder lineares oder verzweigtes C₁-C₁₀-Alkyl, und X ist eine Ether-, Thio-ether-, Ester-, Siloxan- oder Amidgruppe;
- R¹, R²: unabhängig voneinander Wasserstoff;
Halogenid, Hydroxy,
lineares oder verzweigtes C₁-C₂₀-Alkyl, welches eine oder mehrere Gruppen ausgewählt aus Halogen, Hydroxyl, Cyano , Amino oder Mercapto tragen kann; -(R^{x}-X)_{w}-R^{Y} mit w=1-10, R^{x} lineares oder verzweigtes C₁-C₂₀-Alkyl, R^{y} Wasserstoff oder lineares oder verzweigtes C₁-C₁₀-Alkyl, und X ist eine Ether-, Thioether-, Ester-, Siloxan- oder Amidgruppe;
sind; 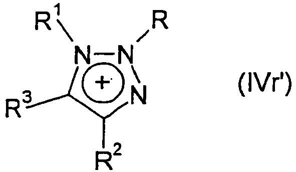 wobei die Reste
- R und R¹: unabhängig voneinander Wasserstoff; lineares oder verzweigtes C₁-C₂₀-Alkyl, welches eine oder mehrere Gruppen ausgewählt aus Halogen, Hydroxyl, Cyano, Amino oder Mercapto tragen kann; oder
-(R^{x}-X)_{w}-R^{Y} mit w=1-10, R^{x} lineares oder verzweigtes C₁-C₂₀-Alkyl, R^{y} Wasserstoff oder lineares oder verzweigtes C₁-C₁₀-Alkyl, und X ist eine Ether-, Thioether-, Ester-, Siloxan- oder Amidgruppe;
- R², R³: unabhängig voneinander Wasserstoff;
Halogenid, Hydroxy,
lineares oder verzweigtes C₁-C₂₀-Alkyl, welches eine oder mehrere Gruppen ausgewählt aus Halogen, Hydroxyl, Cyano , Amino oder Mercapto tragen kann; -(R^{x}-X)_{w}-R^{Y} mit w=1-10, R^{x} lineares oder verzweigtes C₁-C₂₀-Alkyl, R^{y} Wasserstoff oder lineares oder verzweigtes C₁-C₁₀-Alkyl, und X ist eine Ether-, Thioether-, Ester-, Siloxan- oder Amidgruppe;
sind; 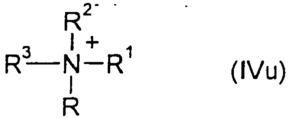 wobei die Reste
- R, R¹, R², R³: unabhängig voneinander Wasserstoff; lineares oder verzweigtes C₁-C₂₀-Alkyl, welches eine oder mehrere Gruppen ausgewählt aus Halogen, Hydroxyl, Cyano, Amino oder Mercapto tragen kann; oder
-(R^{x}-X)_{w}-R^{Y} mit w=1-10, R^{x} lineares oder verzweigtes C₁-C₂₀-Alkyl, R^{y} Wasserstoff oder lineares oder verzweigtes C₁-C₁₀-Alkyl, und X ist eine Ether-, Thioether-, Ester-, Siloxan- oder Amidgruppe;
sind;
oder
- R und R¹: unabhängig voneinander Wasserstoff; lineares oder verzweigtes C₁-C₂₀-Alkyl, welches eine oder mehrere Gruppen ausgewählt aus Halogen, Hydroxyl, Cyano, Amino oder Mercapto tragen kann; oder
-(R^{x}-X)_{w}-R^{y} mit w=1-10, R^{x} lineares oder verzweigtes C₁-C₂₀-Alkyl, R^{y} Wasserstoff oder lineares oder verzweigtes C₁-C₁₀-Alkyl, und X ist eine Ether-, Thioether-, Ester-, Siloxan- oder Amidgruppe;
- R² und R³: bilden gemeinsam einen 3-Oxa-1,5-pentylen-Rest, der seinerseits substituiert sein kann durch: Halogen, Hydroxyl; lineares oder verzweigtes C₁-C₂₀-Alkyl, welches eine oder mehrere Gruppen ausgewählt aus Halogen, Hydroxyl, Cyano, Amino oder Mercapto tragen kann; -(R^{x}-X)_{w}-R^{Y} mit w=1-10, R^{x} lineares oder verzweigtes C₁-C₂₀-Alkyl, R^{y} Wasser-stoff oder lineares oder verzweigtes C₁-C₁₀-Alkyl, und X ist eine Ether-, Thioether-, Ester-, Siloxan- oder Amidgruppe;
sind;
oder
- R und R¹: unabhängig voneinander Wasserstoff; lineares oder verzweigtes C₁-C₂₀-Alkyl, welches eine oder mehrere Gruppen ausgewählt aus Halogen, Hydroxyl, Cyano, Amino oder Mercapto tragen kann; oder
-(R^{x}-X)_{w}-R^{Y} mit w=1-10, R^{x} lineares oder verzweigtes C₁-C₂₀-Alkyl, R^{y} Wasserstoff oder lineares oder verzweigtes C₁-C₁₀-Alkyl, und X ist eine Ether-, Thioether-,Ester-, Siloxan- oder Amidgruppe;
- R² und R³: bilden gemeinsam einen 1,4-buta-1,3-dienylen-Rest, der seinerseits substituiert sein kann durch:
Halogen, Hydroxyl;
lineares oder verzweigtes C₁-C₂₀-Alkyl, welches eine oder mehrere Gruppen ausgewählt aus Halogen, Hydroxyl, Cyano, Amino oder Mercapto tragen kann; -(R^{x}-X)_{w}-R^{Y} mit w=1-10, R^{x} lineares oder verzweigtes C₁-C₂₀-Alkyl, R^{y} Wasserstoff oder lineares oder verzweigtes C₁-C₁₀-Alkyl, und X ist eine Ether-, Thioether-, Ester-, Siloxan- oder Amidgruppe;
sind; 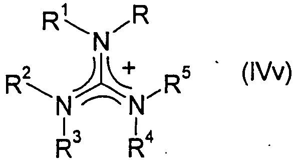 wobei die Reste
- R, R¹, R², R³, R⁴ und R⁵: unabhängig voneinander Wasserstoff; lineares oder verzweigtes C₁-C₂₀-Alkyl, welches eine oder mehrere Gruppen ausgewählt aus Halogen, Hydroxyl, Cyano, Amino oder Mercapto tragen kann; oder
-(R^{x}-X)_{w}-R^{y} mit w=1-10, R^{x} lineares oder verzweigtes C₁-C₂₀-Alkyl, R^{y} Wasserstoff oder lineares oder verzweigtes C₁-C₁₀-Alkyl, und X ist eine Ether-, Thioether-, Ester-, Siloxan- oder Amidgruppe;
sind;
oder 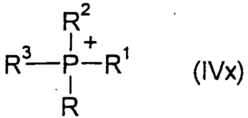 wobei die Reste
- R, R¹, R², R³: unabhängig voneinander Wasserstoff; lineares oder verzweigtes C₁-C₂₀-Alkyl, welches eine oder mehrere Gruppen ausgewählt aus Halogen, Hydroxyl, Cyano, Amino oder Mercapto tragen kann; oder
-(R^{x}-X)_{w}-R^{y} mit w=1-10, R^{x} lineares oder verzweigtes C₁-C₂₀-Alkyl, R^{y} Wasserstoff oder lineares oder verzweigtes C₁-C₁₀-Alkyl, und X ist eine Ether-, Thioether-, Ester-, Siloxan- oder Amidgruppe;
sind.

Die Anionen [Y]ⁿ⁻ sind ausgewählt ist aus der Gruppe bestehend aus Halogenid, Tetrafluoroborat, Sulfat, Phösphat, R^{u}R^{v}PO₂⁻, Dicyanamid, Carboxylat R^{u}-COO⁻, Sulfonat- R^{u}-SO₃⁻, Benzolsulfonat, Toluolsulfonat, organisches Sulfat R^{u}-O-SO₃⁻, Bis(sulfon)imid [R^{u}-SO₂-N-SO₂-R^{v}]⁻, Imide der Struktur [R^{u}-CO-N-CO-R^{v}]⁻ und der Struktur [R^{u}-SO₂-N-CO-R^{v}]⁻, sowie Formiat wobei
R^{u} und R^{v} unabhängig voneinander linearer oder verzweigtes, aliphatisches oder alicyclisches C₁-C₂₀-Alkyl, C₅-C₁₅-Aryl-, C₅-C₁₅-Aryl-C₁-C₆-alkyl oder C₁-C₆-alkyl-C₅-C₁₅-Aryl, wobei die voranstehend genannten Reste durch ein oder mehrere Reste ausgewählt aus der Gruppe Halogen und/ Hydroxyl substituiert sein können.

Besonders bevorzugt sind Arbeitsstoffpaare, die als Komponente A) Wasser oder Ammoniak, und als Komponente B) eine ionische Flüssigkeit gemäß einer der voranstehenden besonderen Ausführungsformen, enthält. Außerordentlich bevorzugt sind hierbei Arbeitsstoffpaare, die als Komponente A) Wasser enthalten. Ebenso besonders bevorzugt sind hierbei Arbeitsstoffpaare, die als Komponente A) Ammoniak enthalten.

Ebenso besonders bevorzugt sind Arbeitsstoffpaare, die als Komponente A) mindestens 10 Gew.-%, bevorzugt mindestens 20 Gew.-%, insbesondere mindestens 30 Gew.-% Arbeitsstoff, bezogen auf das Gesamtgewicht des Arbeitsstoffpaares enthalten.

Ebenso besonders bevorzugt sind Arbeitsstoffpaare, die als Komponente B) höchstens 90 Gew.-%, bevorzugt höchstens 80 Gew.-%, insbesondere höchstens 70 Gew.-% ionische Flüssigkeit, bezogen auf das Gesamtgewicht des Arbeitsstöffpaares enthalten.

Weiterhin sind Arbeitsstoffpaare besonders bevorzugt, die dadurch gekennzeichnet sind, dass der Arbeitsstoff und die ionische Flüssigkeit im Temperaturbereich von -20 bis 200°C, besonders bevorzugt von -5 bis 150°C, mischbar sind. Besonders bevorzugt sind hierbei Arbeitsstoffpaare wobei der Arbeitsstoff Wasser ist.

Weiterhin sind Arbeitsstoffpaare besonders bevorzugt, die dadurch gekennzeichnet sind, dass der Arbeitsstoff und die ionische Flüssigkeit im Temperaturbereich von -60 bis 100°C, besonders bevorzugt von -40 bis 50°C, mischbar sind. Besonders bevorzugt sind hierbei Arbeitsstoffpaare wobei der Arbeitsstoff Ammoniak ist.

In einer weiteren Ausführungsform kann die Ionische Flüssigkeit auf einem geeigneten festen Träger aufgebracht werden.

Die Absorptionswärmepumpen, Absorptionskältemaschinen und Wärmetransformatoren können einen Verflüssiger, ein Expansionsorgan, einen Austreiber und einen Absorber enthalten.

Die vorliegende Erfindung wird durch die nachfolgenden Beispiele näher erläutert.

Die ionischen Flüssigkeiten besitzen einen vernachlässigbar kleinen Dampfdruck; somit sind Arbeitsstoffpaare, gemäß der vorliegenden Erfindung, die ionische Flüssigkeiten und einen Arbeitsstoff enthalten besonders geeignet - es werden beispielsweise Stofftrennproblematiken, wie im Falle des Ammoniak-Wasser Arbeitsstoffpaares, vermeiden.

Die ionischen Flüssigkeiten sind im Arbeitsbereich der Temperaturbereich flüssig sind; somit sind Arbeitsstoffpaare, gemäß der vorliegenden Erfindung, die ionische Flüssigkeiten und einen Arbeitsstoff enthalten, besonders geeignet, da die Problematik von auskristallisierenden Salzen entfällt. Damit kann dem Absorptionsmittel der gesamte Arbeitsstoff, wie z.B. Wasser entzogen und zur Kühlung verwendet werden (hohe Ausgasungsbreite). Des weiteren muss beim Transport des Absorptionsmittels zwischen Austreiber und Absorber nur das Absorptionsmittel selbst, also die ionische Flüssigkeit gekühlt werden und nicht noch zusätzlich Arbeitsstoff, wie in Fall des Stoffpaares Lithiumbromid und Wasser.

Die Mischbarkeit von ionischen Flüssigkeiten mit Arbeitsstoffen ist gegeben, so kann die ionische Flüssigkeit Ethylmethylimidazoliumtriflat mit Wasser gemischt werden. Weiterhin ist die Temperaturbeständigkeit von ionischen Flüssigkeiten ist hervorragend; Blake et al., Proceedings of the 11th SolarPACES International Symposium, 2002 gehen davon aus, daß Temperaturen von weit über 300°C erreicht werden können. Somit ergibt sich auch für die erfindungsgemäßen Arbeitsstoffpaare eine gute Stabilität und Temperaturbeständigkeit.

Weiterhin ist die Toxizität von bisher geprüften ionischen Flüssigkeiten als gering eingestuft worden (z.B. LD₅₀>1000mg/kg); aufgrund ihres praktisch kaum messbaren Dampfdruck, bilden sie potentiell auch keine zündfähigen Gemische und stellen daher weder eine Explosionsquelle dar noch ein Toxizitätsproblem dar.

Es wurde auch gefunden, dass der Dampfdruck von Wasser beim Lösen in ionischen Flüssigkeiten, wie z.B. 2-Hydroxyethylammoniumformiat, um den Faktor 4 erniedrigt werden kann.

Hierzu wurde in einer üblichen Phasengleichgewichtstemperatur der Partialdruck von Wasser über einer wässrigen 2-Hydroxyetylammoniumformiat-Lösung bestimmt (mittels FTIR-Spektroskopie in der Gasphase).
Bei 30.5°C und einer Lösung, die 84 Gew.-% 2-Hydroxyethylammoniumformiat und 16 Gew.-% Wasser enthält, wurde ein Partialdruck von Wasser über dieser Lösung von etwa 10 mbar bestimmt, während der Partialdruck von Wasser über Wasser selbst bei etwa 40 mbar liegt.
Bei einer Temperatur von 34 °C und einer Lösung, die 87 Gew.-% 2-Hydroxyethylammoniumformiat und 13 Gew.-% Wasser enthält, wurde ein Partialdruck von Wasser über dieser Lösung von etwa 12 mbar bestimmt, während der Partialdruck von Wasser über Wasser selbst hier bei dieser Temperatur bei etwa 50 mbar liegt.

Ebenso kann in einer bereits vorhandenen Absorptionskältemaschine, die bisher mit dem Arbeitsstoffpaar Lithiumbromid/Wasser betrieben wird, das genannte Arbeitsstoffpaar durch das System ionische Flüssigkeit/Wasser ersetzt werden, wie beispielsweise N-Ethyl-N-methylimidazoliumtetrafluoroborat/Wasser, ohne dass Änderungen an den baulichen Gegebenheiten der Maschine für den Betrieb mit den neuen Absorptionsmitteln vorgenommen werden müssten.

In einer bevorzugten Ausführungsform kann eine Absorptionswärmepumpe, die herkömmlich mit dem Arbeitsstoffpaar Wasser/Ammoniak betrieben wird, mit dem Arbeitstoffpaar ionischer Flüssigkeit/Ammoniak betrieben werden. In diesem Fall entfällt die sonst übliche Rektifikation des Wasser/Ammoniakgemisches, da die Abtrennung des Ammoniaks von der ionischen Flüssigkeit durch Verdampfen des Ammoniaks vollständig ist.

## Patentansprüche

1. Verwendung eines Arbeitsstoffpaars, enthaltend
A) einen Arbeitsstoff, ausgewählt aus Wasser, Methanol oder Ammoniak
B) mindestens eine ionische Flüssigkeit,
wobei die ionische Flüssigkeit ein Salz der allgemeinen Formeln I, I oder III
B1)
[A]ₙ⁺ [Y]ⁿ⁻ (I)
in der n für 1, 2, 3 oder 4 steht, [A]⁺ für ein quartäres Ammonium-Kation, ein Oxonium-Kation, ein Sulfonium-Kation oder ein Phosphonium-Kation und [Y]ⁿ⁻ für ein ein-, zwei-, drei- oder vierwertiges Anion steht;
B2) gemischte Salze der allgemeinen Formeln (II)
[A¹]⁺[A²]⁺ [Y]²⁻ (IIa);
[A¹]⁺[A²]⁺[A³]⁺ [Y]³⁻ (IIb);
oder
[A¹]⁺[A²]⁺[A³]⁺[A⁴]⁺ [Y]⁴⁻ (IIc),
wobei [A¹]⁺, [A²]⁺, [A³]⁺ und [A⁴]⁺ unabhängig voneinander aus den für [A]⁺ genannten Gruppen ausgewählt sind und [Y]ⁿ⁻ die unter B1) genannte Bedeutung besitzt; oder
B3) gemischte Salze der allgemeinen Formeln (III)
[A+]⁺[A²]⁺[A³]⁺[M¹]⁺ [Y]⁴⁻ (IIIa);
[A¹]⁺[A²]⁺[M¹]⁺[M²]⁺[Y]⁴⁻ (IIIb);
[A¹]⁺[M¹]⁺[M²]⁺[M³]⁺ [Y]⁴⁻. (IIIc);
[A¹]⁺[A²]⁺[M¹]⁺ [Y]³⁻ (IIId);
[A¹]⁺[M¹]⁺[M²]⁺ [Y]³⁻ (IIIe);
[A¹]⁺[M¹]⁺ [Y]²⁻ (IIIf);
[A¹]⁺[A²]⁺[M⁴]²⁺ [Y]⁴⁻ (IIIg);
[A¹]⁺[M¹]⁺[M⁴]²⁺ [Y]⁴⁻ (IIIh);
[A¹]⁺[M⁵]³⁺ [Y]⁴⁻ (IIIi);
oder
[A¹]⁺[M⁴]²⁺ [Y]³⁻ (IIIj)
wobei [A¹]⁺, [A²]⁺ und [A³]⁺ unabhängig voneinander aus den für [A]⁺ genannten Gruppen ausgewählt sind, [Y]ⁿ⁻ die unter B1) genannte Bedeutung besitzt und [M¹]⁺, [M²]⁺, [M³]⁺ einwertige Metallkationen, [M⁴]²⁺ zweiwertige Metallkationen und [M⁵]³⁺ dreiwertige Metallkationen bedeuten;
ist;
oder Gemische hiervon
in Absorptionswärmepumpen, Absorptionskältemaschinen und Absorptionsbasierenden Wärmetransformatoren

2. Verwendung gemäß Anspruch 1, **dadurch gekennzeichnet, dass** die ionische Flüssigkeit in einem Temperaturbereich von -20 bis 200°C, bevorzugt von 0 bis 180°C und besonders bevorzugt von 20 bis 150°C flüssig ist.

3. Verwendung gemäß den Ansprüchen 1 oder 2, **dadurch gekennzeichnet dass** der Arbeitsstoff und die ionische Flüssigkeit im Temperaturbereich von -20 bis 200°C, besonders bevorzugt von -5 bis 150°C, mischbar sind.

4. Verwendung gemäß Anspruch 3, **dadurch gekennzeichnet dass** der Arbeitsstoff und die ionische Flüssigkeit im Temperaturbereich von -60 bis 100°C, besonders bevorzugt -40 bis 50°C, mischbar sind.

5. Verwendung gemäß den Ansprüchen 1 bis 3, **dadurch gekennzeichnet dass** der Arbeitsstoff Wasser ist.

6. Verwendung gemäß den Ansprüchen 1 bis 4, **dadurch gekennzeichnet dass** der Arbeitsstoff Ammoniak ist.

7. Verwendung gemäß einem der Ansprüche 1 oder 2, **dadurch gekennzeichnet, dass** die Absorptionswärmepumpen, Absorptionskältemaschinen und Wärmetransformatoren einen Verflüssiger, ein Expansionsorgan, einen Kocher und einen Absorber enthalten.

## Claims

1. The use of a working substance pairing, which comprises
A) a working substance selected from among water, methanol or ammonia,
B) at least one ionic liquid,
wherein the ionic liquid is a salt of the general formula I, II or III
B1)
[A]ₙ⁺ [Y]ⁿ⁻ (I)
where n is 1, 2, 3 or 4, [A]⁺ is a quaternary ammonium cation, an oxonium cation, a sulfonium cation or a phosphonium cation and [Y]ⁿ⁻ is a monovalent, divalent, trivalent or tetravalent anion;
B2) mixed salts of the general formulae (II)
[A¹]⁺[A²]⁺ [Y]²⁻ (IIa);
[A¹]⁺[A²]⁺[A³]⁺ [Y]³⁻ (IIb);
or
[A¹]⁺[A²]⁺[A³]⁺[A⁴]⁺ [Y]⁴⁻ (IIc),
where [A¹]⁺, [A²]⁺, [A³]⁺ and [A⁴]⁺ are selected independently from among the groups mentioned for [A]⁺ and [Y]ⁿ⁻ is as defined under B1); or
B3) mixed salts of the general formulae (III)
[A¹]⁺[A²]⁺[A³]⁺[M¹]⁺ [Y]⁴⁻ (IIIa);
[A¹]⁺[A²]⁺[M¹]⁺[M²]⁺ [Y]⁴⁻ (IIIb);
[A¹]⁺[M¹]⁺[M²]⁺[M³]⁺ [Y]⁴⁻ (IIIc);
[A¹]⁺[A²]⁺[M¹]⁺ [Y]³⁻ (IIId);
[A¹]⁺[M¹]⁺[M²]⁺ [Y]³⁻ (IIIe);
[A¹]⁺[M¹]⁺ [Y]²⁻ (IIIf);
[A¹]⁺[A²]⁺[M⁴]²⁺ [Y]⁴⁻ (IIIg);
[A¹]⁺[M¹]⁺[M⁴]²⁺ [Y]⁴⁻ (IIIh);
[A¹]⁺[M⁵]³⁺ [Y]⁴⁻ (IIIi);
or
[A¹]⁺[M⁴]²⁺[Y]³⁻ (IIIj)
where [A¹]⁺, [A²]⁺ and [A³]⁺ are selected independently from among the groups mentioned for [A]⁺, [Y]ⁿ⁻ is as defined under B1) and [M¹]⁺, [M²]⁺, [M³]⁺ are monovalent metal cations, [M⁴]²⁺ is a divalent metal cation and [M⁵]³⁺ is a trivalent metal cation;
or a mixture thereof,
in absorption heat pumps, absorption refrigeration machines and absorption-based heat transformers.

2. The use according to claim 1, wherein the ionic liquid is liquid in a temperature range from -20 to 200°C, preferably from 0 to 180°C and particularly preferably from 20 to 150°C.

3. The use according to claim 1 or 2, wherein the working substance and the ionic liquid are miscible in the temperature range from -20 to 200°C, particularly preferably from -5 to 150°C.

4. The use according to claim 3, wherein the working substance and the ionic liquid are miscible in the temperature range from -60 to 100°C, particularly preferably from -40 to 50°C.

5. The use according to any of claims 1 to 3, wherein the working substance is water.

6. The use according to any of claims 1 to 4, wherein the working substance is ammonia.

7. The use according to either of claims 1 and 2, wherein the absorption heat pumps, absorption refrigeration machines and heat transformers comprise a liquefier, an expansion organ, a boiler and an absorber.

## Revendications

1. Utilisation d'une paire de substances de travail, contenant
A) une substance de travail, choisie parmi l'eau, le méthanol ou l'ammoniac
B) au moins un liquide ionique,
le liquide ionique étant un sel de formule générale I, II ou III
B1)
[A]ₙ⁺ [Y]ⁿ⁻ (I)
dans laquelle n représente 1, 2, 3 ou 4, [A]⁺ représente un cation ammonium quaternaire, un cation oxonium, un cation sulfonium ou un cation phosphonium et [Y]ⁿ⁻ représente un anion mono-, di-, tri- ou tétravalent ;
B2) des sels mixtes de formules générales (II)
[A¹]⁺[A²]⁺[Y]²⁻ (IIa) ;
[A¹]⁺[A²]⁺[A³]⁺[Y]³⁻ (IIb) ;
ou
[A¹]⁺[A²]⁺[A³]⁺[A⁴]⁺[Y]⁴⁻ (IIc),
[A¹]⁺, [A²]⁺, [A³]⁺ et [A⁴]⁺ étant choisis, indépendamment les uns des autres, dans les groupes nommés pour [A]⁺, et [Y]ⁿ⁻ ayant la signification donnée en B1) ; ou
B3) des sels mixtes de formule générale (III)
[A¹]⁺[A²]⁺[A³]⁺[M¹]⁺ [Y]⁴⁻ (IIIa) ;
[A¹]⁺[A²]⁺[M¹]⁺[M²]⁺ [Y]⁴ (IIIb) ;
[A¹]⁺[M¹]⁺[M²]⁺[M³]⁺ [Y]⁴ (IIIc) ;
[A¹]⁺[A²]⁺[M¹]⁺ [Y]³⁻ (IIId) ;
[A¹]⁺[M¹]⁺[M²]⁺ [Y]³⁻ (IIIe) ;
[A¹]⁺[M¹]⁺ [Y]²⁻ (IIIf) ;
[A¹]⁺[A²]⁺[M⁴]²⁺ [Y]⁴⁻ (IIIg) ;
[A¹]⁺[M¹]⁺[M⁴]²⁺ [Y]⁴⁻ (IIIh) ;
[A¹]⁺[M⁵]³⁺ [Y]⁴⁻ (IIIi) ;
ou
[A¹]⁺[M⁴]²⁺ [Y]³⁻ (IIIj)
[A¹]⁺, [A²]⁺ et [A³]⁺ étant choisis chacun indépendamment dans les groupes nommés pour [A]⁺, [Y]ⁿ⁻ ayant la signification indiquée en B1) et [M¹]⁺, [M²]⁺, [M³]⁺ représentant des cations métalliques monovalents, [M⁴]²⁺ des cations métalliques divalents et [M⁵]³⁺ des cations métalliques trivalents ;
ou des mélanges de ceux-ci
dans des pompes à chaleur à absorption, des machines frigorifiques à absorption et des convertisseurs de chaleur basés sur l'absorption.

2. Utilisation selon la revendication 1, **caractérisée en ce que** le liquide ionique est liquide dans une plage de température de -20 à 200 °C, de préférence de 0 à 180 °C et de façon particulièrement préférée de 20 à 150 °C.

3. Utilisation selon la revendication 1 ou 2, **caractérisée en ce que** la substance de travail et le liquide ionique sont miscibles dans la plage de température de -20 à 200 °C, de façon particulièrement préférée de -5 à 150 °C.

4. Utilisation selon la revendication 3, **caractérisée en ce que** la substance de travail et le liquide ionique sont miscibles dans la plage de température de -60 à 100 °C, de façon particulièrement préférée de -40 à 50 °C.

5. Utilisation selon les revendications 1 à 3, **caractérisée en ce que** la substance de travail est l'eau.

6. Utilisation selon les revendications 1 à 4, **caractérisée en ce que** la substance de travail est l'ammoniac.

7. Utilisation selon la revendication 1 ou 2, **caractérisée en ce que** les pompes à chaleur à absorption, les machines frigorifiques à absorption et les convertisseurs de chaleur contiennent un condenseur, un organe d'expansion, un bouilleur chaudière et un absorbeur.
